(19)

Europäisches Patentamt

European Patent Office

Office européen des brevets

(11) **EP 4 531 294 A1**

(12) **EUROPEAN PATENT APPLICATION**

(43) Date of publication:
**02.04.2025 Bulletin 2025/14**

(21) Application number: **23200382.2**

(22) Date of filing: **28.09.2023**

(51) International Patent Classification (IPC):
**H04B 1/16** $^{(2006.01)}$     **H04B 17/309** $^{(2015.01)}$

(52) Cooperative Patent Classification (CPC):
**H04B 1/16; H04B 17/309; H04W 16/14;**
H04W 88/085

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **INTEL Corporation
Santa Clara, CA 95054 (US)**

(72) Inventors:
• **BALLANTYNE, Wayne**
  **Chandler, 85286 (US)**

• **GRAHAM, David**
  **Gilbert, 85296 (US)**
• **MUECK, Markus Dominik**
  **Unterhaching (DE)**
• **ZIVKOVIC, Zoran**
  **5223DH Hertogenbosch NB (NL)**

(74) Representative: **Viering, Jentschura & Partner
mbB
Patent- und Rechtsanwälte
Am Brauhaus 8
01099 Dresden (DE)**

(54) **METHODS AND DEVICES TO PERFORM SPECTRUM SENSING**

(57)    An apparatus of a radio communication device, the apparatus may include a plurality of signal paths, each signal path of the plurality of signal paths is configured to receive a radio frequency, RF, signal from a corresponding RF circuit; and a processor configured to: determine first signal paths and a second signal path from the plurality of signal paths, wherein the first signal paths are configured to receive first RF signals of the RF signals; demodulate the first RF signals received from the first signal paths to decode received communication data; perform, for a frequency band, an RF environmental sensing operation based on a digital signal converted from a second RF signal of the RF signals, wherein the second RF signal is provided by the second signal path.

FIG. 3

EP 4 531 294 A1

## Description

### Technical Field

This disclosure generally relates to methods and devices to perform spectrum sensing using RF signals.

### Background

Cognitive Radio is a technology that allows wireless devices to dynamically access and use shared radio frequencies efficiently by sensing and adapting to their environment. This approach has found applications in various fields, including wireless communication, to enhance spectrum utilization. Various instances of its application include the utilization of TV White Space (TVWS) and the Citizens Broadband Radio Service (CBRS) shared spectrum, where radio communication devices may coexist with TV and radar transmissions. The protection schemes employed have ranged from static exclusion zones to Environmental Sensing Capability (ESC), demonstrating the adaptability of cognitive radio technology to diverse spectrum-sharing scenarios.

In wireless communication, radio communication devices equipped with multiple RF circuits and antennas can simultaneously operate across different frequency bands. For instance, remote radio head unit is one of the exemplary devices providing this capability, enabling the expansion of network coverage and capacity. These devices leverage multiple RF circuits and antennas to transmit and receive data over distinct frequency bands simultaneously. It's important to note that while some of the RF circuits are used actively for data transmission, others may operate in an idle state, ready to be engaged for radio communication as needed.

### Brief Description of the Drawings

In the drawings, like reference characters generally refer to the same parts throughout the different views. The drawings are not necessarily to scale, emphasis instead generally being placed upon illustrating the principles of the disclosure. In the following description, various aspects of the disclosure are described with reference to the following drawings, in which:

FIG. 1 shows an exemplary radio communication network;
FIG. 2 shows an exemplary internal configuration of a communication device;
FIG. 3 shows an exemplary illustration of various communication elements of a radio communication device;
FIG. 4 shows an exemplary illustration of a radio communication device in accordance with various aspects described herein;
FIG. 5 shows an exemplary illustration of RF energy detectable via an RF ES operation;
FIG. 6 shows an exemplary illustration of an RX path;
FIG. 7A and FIG. 7B shows examples of representations of spectral detections;
FIG. 8 shows an exemplary illustration of a down-sampled spectra;
FIG. 9 shows an exemplary illustration of an RX path in accordance with various aspects described herein;
FIG. 10 shows an exemplary illustration of a signal path between an antenna and a digital processing unit;
FIG. 11 shows an exemplary illustration of a time-domain schedule of a signal path;
FIG. 12 shows an example of a flow chart that a radio communication device may use;
FIG. 13 shows an exemplary illustration of a block diagram in accordance with various aspects described herein;
FIG. 14 shows an exemplary radio access network architecture in which the radio access network is disaggregated into multiple units;
FIG. 15 shows an example of a method.

### Description

The following detailed description refers to the accompanying drawings that show, by way of illustration, exemplary details and aspects in which aspects of the present disclosure may be practiced.

One early application of cognitive radio technology may involve utilizing TV White Space (TVWS) to provide internet access in regions where certain TV channels remain unused. Initial plans considered using monitoring receivers, which were at a later stage amended to TVWS availability depending on a location of the user and the known locations and power levels of nearby TV channels. Despite early promise, TVWS-based internet access faced challenges, including a lack of standardized protocols.

The Citizens Broadband Radio Service (CBRS) deployment, operating in the 3.550-3.70 GHz band, may present another opportunity for shared spectrum access. Various methods are used to ensure that the highest-priority users, such as radars used for radio detection and ranging in certain crucial operations, such as defense or aviation, are protected from interference. Various protection methods have been employed, ranging from static exclusion zones to Environmental Sensing Capability (ESC), which utilizes both network-based and device-based RF sensors. It is to be noted that these frequencies are now used by major radio telecommunication carriers for 5G New Radio (NR), demonstrating successful commercial utilization of shared access mechanisms.

However, RF environmental sensing often necessitates dedicated receivers. In the case of direct conversion receivers, scanning the Local Oscillator (LO) to analyze the desired frequency band is time-consuming. Currently employed User Equipment (UE)-based scanning also poses challenges, including potential battery life degradation, data upload requirements to the RF network, and privacy concerns.

There are various methods and products currently on use for accessing shared frequency bands, which may be examples of spectrum sensing and cognitive radio technology. Various dedicated spectrum sensing solutions are provided both for narrowband and/or wideband data streams. Exemplarily, a dedicated analyzer monitoring tools may be configured specifically for E-Band backhaul data links, enabling real-time monitoring. Various methods are being developed particularly to support dynamic spectrum sharing in the presence of military radar. Certain methods and devices utilize Environmental Sensing Capability (ESC) to inform a network to modify channel usage accordingly.

In accordance with various aspects in this disclosure, methods and devices are described, in which ESC operations and RF communication operations coexist with each other over multiple receive signal paths of a receiver of radio communication device, in a manner that each receive signal path may be used both for an RF communication operation and an RF environmental sensing (ES) operation. The radio communication device may determine to use, in some examples adaptively, some of its available receive signal paths for RF communication, while it uses some of remaining receive signal paths for RF ES simultaneously at one time instance. In some aspects, the receive signal paths determined to perform RF ES operation may be referred to as one or more second signal paths, while the receive signal paths determined to perform RF communication operations may be referred to as first signal paths.

Accordingly, methods and devices provided in this disclosure may include an RF receive (RX) data capture system and methods that are suitable to operate in parallel with existing direct RF sampling radio communication devices, such as direct RF sampling base station transceivers, which may result in requiring minimal overhead on top of the conventional architecture of radio communication devices including multiple receive signal paths in RF circuits. In accordance with various aspects described herein, the existing RF RX signal processing required to process RX data (e.g. for UE uplink functionality) is unaffected. In accordance with various aspects described herein, a radio communication device including multiple signal paths configured for receiving multiple RF signals may require no additional RF ports or antennas to be an ESC device (i.e. to perform RF ES) during its regular operation.

In accordance with various aspects provided herein, the RF ES operation may include a determination of one or more spectral contents within a frequency band that may be a narrowband or a wideband, which may also be referred to as spectrum sensing. In such an example, the RF ES operation may further include generating information based on determined one or more spectral contents, and making radio communication allocation or scheduling operations based on the generated information to avoid or reduce radio interference. In some examples, the RF ES operation may include conveying digital data indicative of spectral content within the frequency band to another entity that performs spectrum analysis on the digital data to determine one or more spectral contents. Illustratively, the radio communication device may be a remote radio head unit (RRH) of a radio access network, while another entity that performs spectrum analysis may be a controlling entity of the radio access network, such as a distributed unit or a centralized unit. The RRH may transfer the digital data indicative of spectral content via designated communication interfaces (e.g. fronthaul interface) to the controlling entity. It is to be noted that the term "the digital data" used herein within the context of RF ES operation may include digital data, converted from a received RF signal, captured within an RX path, which the digital data can be capture at the output of the ADC, or anywhere along the digital processing chain within the RX path where the sample rate of the captured data still complies with the required or desired oversampling rate to properly convey the spectral content of the desired analysis, whether that be wideband or in-channel.

In accordance with generated spectral reports representative of determined one or more spectral contents within one or more frequency bands, devices may obtain information about interfering signals within the one or more frequency bands and configure their RF communication operations accordingly. Furthermore, spectral reports may be conveyed through further entities within the network architecture for their scheduling and allocation operations. Illustratively, if a network operator learns that, late at night, other operators of nearby adjacent channels shut off their carriers on those channels, the network operator can reduce network power consumption by (a) reconfiguring the RX digital filter complexity so as to reduce Adjacent Channel Selectivity without impairing overall RF blocking performance (since there are no nearby interferers), or (b) simplifying the downlink (DL) DPD configuration since stringent ACLR and close-in emissions specs aren't needed when there are no other adjacent channels. Additionally, or alternatively, if the network operator has multiple component carriers (CCs) that it uses to satisfy peak traffic, and late at night it shuts down certain CCs when traffic abates, it can choose the ones to shut off such that the remaining CCs in use will be as far as possible from other operators' CCs, as determined by its own ESC capability.

It is to be noted that although the description may exemplify the radio communication device described in accordance with various aspects from time to time as an RRH, this should not be taken as limiting. The skilled person would recognize aspects that are specific to RRHs, some of which may be indicated explicitly as such within this disclosure, while some or most of aspects described by exemplifying RRHs are applicable to other types of radio communication devices within the framework described herein.

It is further to be noted that, within the context of remote radio heads (RRH), which are typically dedicated to serving UEs within specified RF bands/channels, supporting broadband RF spectrum sensing is not a standard functionality. In accordance with various aspects described herein, RRH capabilities are extended to incorporate spectrum sensing which may result in substantial cost savings. The evolving landscape of shared spectrum access and the need for efficient RF environmental sensing may call for innovative solutions that can simplify spectrum sensing while optimizing costs, particularly in radio communication device deployments, particularly in RRH deployments.

In accordance with various aspects provided herein, a processor of the radio communication device may selectively perform either an RF ES operation or an RF communication operation with RF signals received on each RX signal path. In some aspects, the processor may route the RF signal received from a RX signal path for either an RF communication operation (i.e. to decode communication data included within the RF signal) or an RF ES operation (i.e. for analysis of spectral contents within the RF signal). By using the same signal path for both RF communication operation and RF ES operation, the radio communication device may not require separate components (i.e. RF circuits, antennas) for each communication operation and RF ES operation. Sometimes, RF communication operation may be referred to as a mission mode within the context of base station transceivers, in which the transceiver, with respect to a corresponding RX path may operate in the normal operational mode in which the base station is actively serving its primary function, which is to provide wireless communication services to connected user devices. During mission mode, the base station is actively transmitting and receiving data, connecting calls, or handling data sessions for mobile devices within its coverage area.

In accordance with various aspects provided herein, when a signal path is selected for RF ES operation, the processor may send digital data converted from the RF signal being fed to the respective signal path to another component or to another entity. Based on certain aspects, the processor may send the digital data via a data converter serial interface, in particular when the digital data is sent, in substantially real-time as a stream, to a digital processing unit. Illustratively, the data converter serial interface may be a Joint Electron Device Engineering Council (JEDEC) Solid State Technology Association interface, such as a JESD204 interface. In some aspects, the processor may send the digital data, which may be stored in a memory, via a packet-based communication interface. Illustratively, the packet-based communication interface may be Peripheral Component Interconnect (PCI) or PCI-Express interface.

In accordance with various aspects provided herein, the processor may determine signal paths to be used for RF ES operation (e.g. one or more second signal paths) from available signal paths based on RF communication operations scheduled for the radio communication device. Illustratively, as a RRH, the radio communication device may schedule RF communication operations with UEs to receive/transmit RF communication signals from/to the UEs in certain time and frequency resources. The processor may cause one or more signal paths to be used for RF ES operation, when there are time and frequency resources available to use the respective one or more signal paths for RF ES operation.

In accordance with various aspects provided herein, noting that detection of certain waveforms, in particular within military or transportation (e.g. aviation) context, may be sensitive due to security risks or required authorizations, the processor may perform RF ES operation using a trusted execution environment (TEE). Exemplarily, the processor may process digital data or any product of digital data to be used for RF ES operation within the TEE, and may store data associated with the processing of digital data in a secure enclave. Furthermore, the processor may perform the communication to send the digital data or any product of the digital data using links that are encrypted in accordance with an encryption mechanism.

The apparatuses and methods of this disclosure (i.e. radio communication devices and mobile radio communication devices, together with methods described herein) may utilize or be related to radio communication technologies. While some examples may refer to specific radio communication technologies, the examples provided herein may be similarly applied to various other radio communication technologies, both existing and not yet formulated, particularly in cases where such radio communication technologies share similar features as disclosed regarding the following examples. Various exemplary radio communication technologies that the apparatuses and methods described herein may utilize include, but are not limited to:

a Global System for Mobile Communications (GSM) radio communication technology, a General Packet Radio Service (GPRS) radio communication technology, an Enhanced Data Rates for GSM Evolution (EDGE) radio communication technology, and/or a Third Generation Partnership Project (3GPP) radio communication technology, for example Universal Mobile Telecommunications System (UMTS), Freedom of Multimedia Access (FOMA), 3GPP Long Term Evolution (LTE), 3GPP Long Term Evolution Advanced (LTE Advanced), Code division multiple access 2000 (CDMA2000), Cellular Digital Packet Data (CDPD), Mobitex, Third Generation (3G), Circuit Switched Data (CSD), High-Speed Circuit-Switched Data (HSCSD), Universal Mobile Telecommunications System (Third Generation) (UMTS (3G)), Wideband Code Division Multiple Access (Universal Mobile Telecommunications System) (W-CDMA (UMTS)), High Speed Packet Access (HSPA), High-Speed Downlink Packet Access (HSDPA), High-Speed Uplink Packet Access (HSUPA), High Speed Packet Access Plus (HSPA+), Universal Mobile Telecommunications System-Time-Division Duplex (UMTS-TDD), Time Division-Code Division Multiple Access (TD-CDMA), Time Division-Synchronous Code Division Multiple Access (TD-CDMA), 3rd Generation Partnership Project Release 8 (Pre-4th Generation) (3GPP Rel. 8 (Pre-4G)), 3GPP Rel. 9 (3rd Generation Partnership Project Release 9), 3GPP Rel. 10 (3rd Generation Partnership Project Release 10) , 3GPP Rel. 11 (3rd Generation Partnership Project Release 11), 3GPP Rel. 12 (3rd Generation Partnership Project Release 12), 3GPP Rel. 13 (3rd Generation Partnership Project Release 13), 3GPP Rel. 14 (3rd Generation Partnership Project Release 14), 3GPP Rel. 15 (3rd Generation Partnership Project Release 15), 3GPP Rel. 16 (3rd Generation Partnership Project Release 16), 3GPP Rel. 17 (3rd Generation Partnership Project Release 17) and subsequent Releases (such as Rel. 18, Rel. 19, etc.), 3GPP 5G, 5G, 5G New Radio (5G NR), 3GPP 5G New Radio, 3GPP LTE Extra, LTE-Advanced Pro, LTE Licensed-Assisted Access (LAA), MuLTEfire, UMTS Terrestrial Radio Access (UTRA), Evolved UMTS Terrestrial Radio Access (E-UTRA), Long Term Evolution Advanced (4th Generation) (LTE Advanced (4G)), cdmaOne (2G), Code division multiple access 2000 (Third generation) (CDMA2000 (3G)), Evolution-Data Optimized or Evolution-Data Only (EV-DO), Advanced Mobile Phone System (1st Generation) (AMPS (1G)), Total Access Communication System/Extended Total Access Communication System (TACS/ETACS), Digital AMPS (2nd Generation) (D-AMPS (2G)), Push-to-talk (PTT), Mobile Telephone System (MTS), Improved Mobile Telephone System (IMTS), Advanced Mobile Telephone System (AMTS), OLT (Norwegian for Offentlig Landmobil Telefoni, Public Land Mobile Telephony), MTD (Swedish abbreviation for Mobiltelefonisystem D, or Mobile telephony system D), Public Automated Land Mobile (Autotel/PALM), ARP (Finnish for Autoradiopuhelin, "car radio phone"), NMT (Nordic Mobile Telephony), High capacity version of NTT (Nippon Telegraph and Telephone) (Hicap), Cellular Digital Packet Data (CDPD), Mobitex, DataTAC, Integrated Digital Enhanced Network (iDEN), Personal Digital Cellular (PDC), Circuit Switched Data (CSD), Personal Handy-phone System (PHS), Wideband Integrated Digital Enhanced Network (WiDEN), iBurst, Unlicensed Mobile Access (UMA), also referred to as also referred to as 3GPP Generic Access Network, or GAN standard), Zigbee, Bluetooth(r), Wireless Gigabit Alliance (WiGig) standard, mmWave standards in general (wireless systems operating at 10-300 GHz and above such as WiGig, IEEE 802.11ad, IEEE 802.11ay, etc.), technologies operating above 300 GHz and THz bands, (3GPP/LTE based or IEEE 802.11p or IEEE 802.11bd and other) Vehicle-to-Vehicle (V2V) and Vehicle-to-X (V2X) and Vehicle-to-Infrastructure (V2I) and Infrastructure-to-Vehicle (I2V) communication technologies, 3GPP cellular V2X, DSRC (Dedicated Short Range Communications) communication systems such as Intelligent-Transport-Systems and others (typically operating in 5850 MHz to 5925 MHz or above (typically up to 5935 MHz following change proposals in CEPT Report 71)), the European ITS-G5 system (i.e. the European flavor of IEEE 802.11p based DSRC, including ITS-G5A (i.e., Operation of ITS-G5 in European ITS frequency bands dedicated to ITS for safety re-lated applications in the frequency range 5,875 GHz to 5,905 GHz), ITS-G5B (i.e., Operation in European ITS frequency bands dedicated to ITS non- safety applications in the frequency range 5,855 GHz to 5,875 GHz), ITS-G5C (i.e., Operation of ITS applications in the frequency range 5,470 GHz to 5,725 GHz)), DSRC in Japan in the 700MHz band (including 715 MHz to 725 MHz), IEEE 802.11bd based systems, etc.

The apparatuses and methods described herein may use such radio communication technologies according to various spectrum management schemes, including, but not limited to, dedicated licensed spectrum, unlicensed spectrum, license exempt spectrum, (licensed) shared spectrum (such as LSA = Licensed Shared Access in 2.3-2.4 GHz, 3.4-3.6 GHz, 3.6-3.8 GHz and further frequencies and SAS = Spectrum Access System / CBRS = Citizen Broadband Radio System in 3.55-3.7 GHz and further frequencies). Applicable spectrum bands include IMT (International Mobile Telecommunications) spectrum as well as other types of spectrum/bands, such as bands with national allocation (including 450 - 470 MHz, 902-928 MHz (note: allocated for example in US (FCC Part 15)), 863-868.6 MHz (note: allocated for example in European Union (ETSI EN 300 220)), 915.9-929.7 MHz (note: allocated for example in Japan), 917-923.5 MHz (note: allocated for example in South Korea), 755-779 MHz and 779-787 MHz (note: allocated for example in China), 790 - 960 MHz, 1710 - 2025 MHz, 2110 - 2200 MHz, 2300 - 2400 MHz, 2.4-2.4835 GHz (note: it is an ISM band with global availability and it is used by Wi-Fi technology family (11b/g/n/ax) and also by Bluetooth), 2500 - 2690 MHz, 698-790 MHz, 610 - 790 MHz, 3400 - 3600 MHz, 3400 - 3800 MHz, 3800 - 4200 MHz, 3.55-3.7 GHz (note: allocated for example in the US for Citizen Broadband Radio Service), 5.15-5.25 GHz and 5.25-5.35 GHz and 5.47-5.725 GHz and 5.725-5.85 GHz bands (note: allocated for example in the US (FCC part 15), consists four U-NII bands in total 500 MHz spectrum), 5.725-5.875 GHz (note: allocated for example in EU (ETSI EN 301 893)), 5.47-5.65 GHz (note: allocated for example in South Korea, 5925-7125 MHz and 5925-6425MHz band (note: under consideration in US and EU, respectively. Next generation Wi-Fi system is expected to include the 6 GHz spectrum as operating band but it is noted that, as of December 2017, Wi-Fi system is not yet allowed in this band. Regulation is expected to be finished in 2019-2020 time frame), IMT-advanced spectrum, IMT-2020 spectrum (expected to include 3600-3800 MHz, 3800 - 4200 MHz, 3.5 GHz bands, 700 MHz bands, bands within the 24.25-86 GHz range, etc.), spectrum made available under FCC's "Spectrum Frontier" 5G initiative (including 27.5 - 28.35 GHz, 29.1 - 29.25 GHz, 31 - 31.3 GHz, 37 - 38.6 GHz, 38.6 - 40 GHz, 42 - 42.5 GHz, 57 - 64 GHz, 71 - 76 GHz, 81 - 86 GHz and 92 - 94 GHz, etc), the ITS (Intelligent Transport Systems) band of 5.9 GHz (typically 5.85-5.925 GHz) and 63-64 GHz, bands currently allocated to WiGig such as WiGig Band 1 (57.24-59.40 GHz), WiGig Band 2 (59.40-61.56 GHz) and WiGig Band 3 (61.56-63.72 GHz) and WiGig Band 4 (63.72-65.88 GHz), 57-64/66 GHz (note: this band has near-global designation for Multi-Gigabit Wireless Systems (MGWS)/WiGig . In US (FCC part 15) allocates total 14 GHz spectrum, while EU (ETSI EN 302 567 and ETSIEN 301 217-2 for fixed P2P) allocates total 9 GHz spectrum), the 70.2 GHz - 71 GHz band, any band between 65.88 GHz and 71 GHz, bands currently allocated to automotive radar applications such as 76-81 GHz, and future bands including 94-300 GHz and above. Furthermore, the scheme can be used on a secondary basis on bands such as the TV White Space bands (typically below 790 MHz) where in particular the 400 MHz and 700 MHz bands are promising candidates. Besides cellular applications, specific applications for vertical markets may be addressed such as PMSE (Program Making and Special Events), medical, health, surgery, automotive, low-latency, drones, etc. applications.

For purposes of this disclosure, radio communication technologies may be classified as one of a Short Range radio communication technology or Cellular Wide Area radio communication technology. Short Range radio communication technologies may include Bluetooth, WLAN (e.g., according to any IEEE 802.11 standard), and other similar radio communication technologies. Cellular Wide Area radio communication technologies may include Global System for Mobile Communications ("GSM"), Code Division Multiple Access 2000 ("CDMA2000"), Universal Mobile Telecommunications System ("UMTS"), Long Term Evolution ("LTE"), General Packet Radio Service ("GPRS"), Evolution-Data Optimized ("EV-DO"), Enhanced Data Rates for GSM Evolution ("EDGE"), High Speed Packet Access (HSPA; including High Speed Downlink Packet Access ("HSDPA"), High Speed Uplink Packet Access ("HSUPA"), HSDPA Plus ("HSDPA+"), and HSUPA Plus ("HSUPA+")), Worldwide Interoperability for Microwave Access ("WiMax") (e.g., according to an IEEE 802.16 radio communication standard, e.g., WiMax fixed or WiMax mobile), etc., and other similar radio communication technologies. Cellular Wide Area radio communication technologies also include "small cells" of such technologies, such as microcells, femtocells, and picocells. Cellular Wide Area radio communication technologies may be generally referred to herein as "cellular" communication technologies.

Aspects described herein can also implement a hierarchical application of the scheme is possible, e.g. by introducing a hierarchical prioritization of usage for different types of users (e.g., low/medium/high priority, etc.), based on a prioritized access to the spectrum e.g. with highest priority to tier-1 users, followed by tier-2, then tier-3, etc. users, etc.

Aspects described herein can also be applied to different Single Carrier or OFDM flavors (CP-OFDM, SC-FDMA, SC-OFDM, filter bank-based multicarrier (FBMC), OFDMA, etc.) and in particular 3GPP NR (New Radio) by allocating the OFDM carrier data bit vectors to the corresponding symbol resources.]. Some of the features in this document are defined for the network side, such as Access Points, eNodeBs, New Radio (NR) or next generation Node Bs (gNodeB or gNB - note that this term is typically used in the context of 3GPP fifth generation (5G) communication systems), etc. Still, a User Equipment (UE) may take this role as well and act as an Access Points, eNodeBs, gNodeBs, etc. I.e., some or all features defined for network equipment may be implemented by a UE.

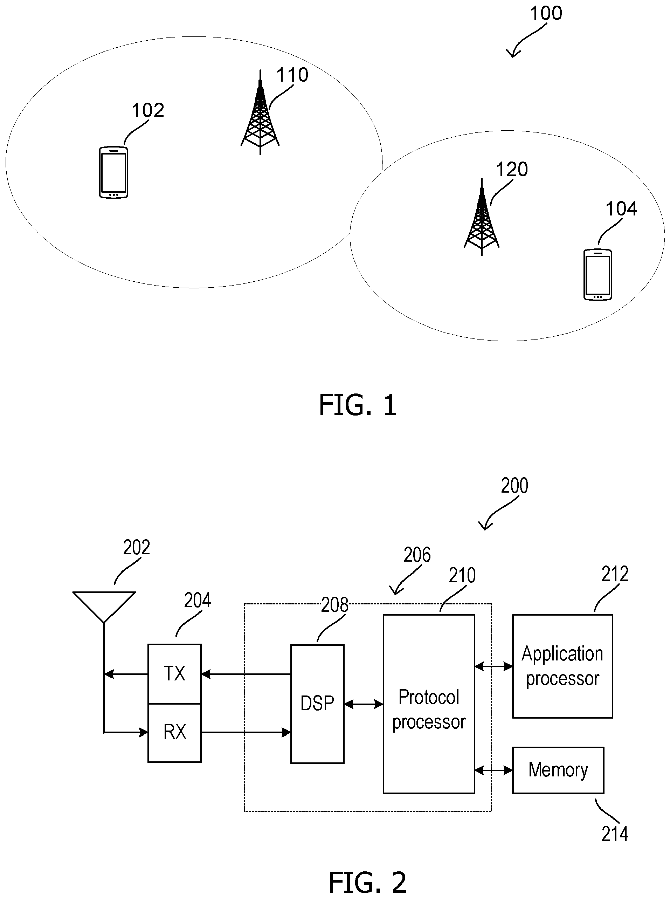

FIGs. 1 and 2 depict a general network and device architecture for wireless communications. In particular, FIG. 1 shows exemplary radio communication network 100 according to some aspects, which may include terminal devices 102 and 104 and network access nodes 110 and 120. Radio communication network 100 may communicate with terminal devices 102 and 104 (i.e. mobile radio communication devices, e.g. UEs) via network access nodes 110 and 120 (i.e. radio communication devices) over a radio access network. Although certain examples described herein may refer to a particular radio access network context (e.g., LTE, UMTS, GSM, other 3rd Generation Partnership Project (3GPP) networks, WLAN/WiFi, Bluetooth, 5GNR, mmWave, etc.), these examples are demonstrative and may therefore be readily applied to any other type or configuration of radio access network. The number of network access nodes and terminal devices in radio communication network 100 is exemplary and is scalable to any amount.

In an exemplary cellular context, network access nodes 110 and 120 may be base stations (e.g., eNodeBs, NodeBs, Base Transceiver Stations (BTSs), gNodeBs, or any other type of base station), while terminal devices 102 and 104 may be cellular terminal devices (e.g., Mobile Stations (MSs), User Equipments (UEs), or any type of cellular terminal device). Network access nodes 110 and 120 may therefore interface (e.g., via backhaul interfaces) with a cellular core network such as an Evolved Packet Core (EPC, for LTE), Core Network (CN, for UMTS), or other cellular core networks, which may also be considered part of radio communication network 100. The cellular core network may interface with one or more external data networks. In an exemplary short-range context, network access node 110 and 120 may be access points (APs, e.g., WLAN or WiFi APs), while terminal device 102 and 104 may be short range terminal devices (e.g., stations (STAs)). Network access nodes 110 and 120 may interface (e.g., via an internal or external router) with one or more external data networks. Network access nodes 110 and 120 and terminal devices 102 and 104 may include one or multiple transmission/reception points (TRPs).

Network access nodes 110 and 120 (and, optionally, other network access nodes of radio communication network 100 not explicitly shown in FIG. 1) may accordingly provide a radio access network to terminal devices 102 and 104 (and, optionally, other terminal devices of radio communication network 100 not explicitly shown in FIG. 1). In an exemplary cellular context, the radio access network provided by network access nodes 110 and 120 may enable terminal devices 102 and 104 to wirelessly access the core network via radio communications. The core network may provide switching, routing, and transmission, for traffic data related to terminal devices 102 and 104, and may further provide access to various internal data networks (e.g., control nodes, routing nodes that transfer information between other terminal devices on radio communication network 100, etc.) and external data networks (e.g., data networks providing voice, text, multimedia (audio, video, image), and other Internet and application data). In an exemplary short-range context, the radio access network provided by network access nodes 110 and 120 may provide access to internal data networks (e.g., for transferring data between terminal devices connected to radio communication network 100) and external data networks (e.g., data networks providing voice, text, multimedia (audio, video, image), and other Internet and application data).

The radio access network and core network (if applicable, such as for a cellular context) of radio communication network 100 may be governed by communication protocols that can vary depending on the specifics of radio communication network 100. Such communication protocols may define the scheduling, formatting, and routing of both user and control data traffic through radio communication network 100, which includes the transmission and reception of such data through both the radio access and core network domains of radio communication network 100. Accordingly, terminal devices 102 and 104 and network access nodes 110 and 120 may follow the defined communication protocols to transmit and receive data over the radio access network domain of radio communication network 100, while the core network may follow the defined communication protocols to route data within and outside of the core network. Exemplary communication protocols include 5G (NR), LTE, UMTS, GSM, WiMAX, Bluetooth, WiFi, mmWave, etc., any of which may be applicable to radio communication network 100.

FIG. 2 shows an exemplary internal configuration of a communication device according to various aspects provided in this disclosure. Communication device may include various aspects of radio communication devices (e.g. network access nodes 110, 120) or various aspects of mobile radio communication devices (e.g. terminal device 102, 104) as well. The communication device 200 may include antenna system 202, radio frequency (RF) transceiver 204, baseband modem 206 (including digital signal processor 208 and protocol controller 210), application processor 212, and memory 214. Although not explicitly shown in FIG. 2, in some aspects communication device 200 may include one or more additional hardware and/or software components, such as processors/microprocessors, controllers/microcontrollers, other specialty or generic hardware/processors/circuits, peripheral device(s), memory, power supply, external device interface(s), subscriber identity module(s) (SIMs), user input/output devices (display(s), keypad(s), touchscreen(s), speaker(s), external button(s), camera(s), microphone(s), etc.), or other related components.

Communication device 200 may transmit and receive radio signals on one or more radio access networks. Baseband modem 206 may direct such communication functionality of communication device 200 according to the communication protocols associated with each radio access network, and may execute control over antenna system 202 and RF transceiver 204 to transmit and receive radio signals according to the formatting and scheduling parameters defined by each communication protocol. Although various practical designs may include separate communication components for each supported radio communication technology (e.g., a separate antenna, RF transceiver, digital signal processor, and controller), for purposes of conciseness the configuration of communication device 200 shown in FIG. 2 depicts only a single instance of such components.

Communication device 200 may transmit and receive wireless signals with antenna system 202. Antenna system 202 may be a single antenna or may include one or more antenna arrays that each include multiple antenna elements. For example, antenna system 202 may include an antenna array at the top of communication device 200 and a second antenna array at the bottom of communication device 200. In some aspects, antenna system 202 may additionally include analog antenna combination and/or beamforming circuitry. In the receive (RX) path (i.e. RX signal path), RF transceiver 204 may receive analog radio frequency signals from antenna system 202 and perform analog and digital RF front-end processing on the analog radio frequency signals to produce digital baseband samples (e.g., In-Phase/Quadrature (IQ) samples) to provide to baseband modem 206. RF transceiver 204 may include analog and digital reception components including amplifiers (e.g., Low Noise Amplifiers (LNAs)), filters, RF demodulators (e.g., RF IQ demodulators)), and analog-to-digital converters (ADCs), which RF transceiver 204 may utilize to convert the received radio frequency signals to digital baseband samples.

In the transmit (TX) path, RF transceiver 204 may receive digital baseband samples from baseband modem 206 and perform analog and digital RF front-end processing on the digital baseband samples to produce analog radio frequency signals to provide to antenna system 202 for wireless transmission. RF transceiver 204 may thus include analog and digital transmission components including amplifiers (e.g., Power Amplifiers (PAs), filters, RF modulators (e.g., RF IQ modulators), and digital-to-analog converters (DACs), which RF transceiver 204 may utilize to mix the digital baseband samples received from baseband modem 206 and produce the analog radio frequency signals for wireless transmission by antenna system 202. In some aspects baseband modem 206 may control the radio transmission and reception of RF transceiver 204, including specifying the transmit and receive radio frequencies for operation of RF transceiver 204.

RF transceiver 204 may include a plurality of TX and RX paths, each configured as described above, such that each TX path may receive digital baseband signals from baseband modem 206 and perform analog and digital RF front-end processing on the digital baseband samples to produce analog RF signals to provide to antenna system 202, and each RX path may receive analog RF signals from antenna system 202 and perform analog and digital RF front-end processing on the analog radio frequency signals to produce digital baseband signals to provide to baseband modem.

As shown in FIG. 2, baseband modem 206 may include digital signal processor 208, which may perform physical layer (PHY, Layer 1) transmission and reception processing to, in the transmit path, prepare outgoing transmit data provided by protocol controller 210 for transmission via RF transceiver 204, and, in the receive path, prepare incoming received data provided by RF transceiver 204 for processing by protocol controller 210. Digital signal processor 208 may be configured to perform one or more of error detection, forward error correction encoding/decoding, channel coding and interleaving, channel modulation/demodulation, physical channel mapping, radio measurement and search, frequency and time synchronization, antenna diversity processing, power control and weighting, rate matching/de-matching, retransmission processing, interference cancelation, and any other physical layer processing functions. Digital signal processor 208 may be structurally realized as hardware components (e.g., as one or more digitally-configured hardware circuits or FPGAs), software-defined components (e.g., one or more processors configured to execute program code defining arithmetic, control, and I/O instructions (e.g., software and/or firmware) stored in a non-transitory computer-readable storage medium), or as a combination of hardware and software components. In some aspects, digital signal processor 208 may include one or more processors configured to retrieve and execute program code that defines control and processing logic for physical layer processing operations. In some aspects, digital signal processor 208 may execute processing functions with software via the execution of executable instructions. In some aspects, digital signal processor 208 may include one or more dedicated hardware circuits (e.g., ASICs, FPGAs, and other hardware) that are digitally configured to specific execute processing functions, where the one or more processors of digital signal processor 208 may offload certain processing tasks to these dedicated hardware circuits, which are known as hardware accelerators. Exemplary hardware accelerators can include Fast Fourier Transform (FFT) circuits and encoder/decoder circuits. In some aspects, the processor and hardware accelerator components of digital signal processor 208 may be realized as a coupled integrated circuit.

Communication device 200 may be configured to operate according to one or more radio communication technologies. Digital signal processor 208 may be responsible for lower-layer processing functions (e.g., Layer 1/PHY) of the radio communication technologies, while protocol controller 210 may be responsible for upper-layer protocol stack functions (e.g., Data Link Layer/Layer 2 and/or Network Layer/Layer 3). Protocol controller 210 may thus be responsible for controlling the radio communication components of communication device 200 (antenna system 202, RF transceiver 204, and digital signal processor 208) in accordance with the communication protocols of each supported radio communication technology, and accordingly may represent the Access Stratum and Non-Access Stratum (NAS) (also encompassing Layer 2 and Layer 3) of each supported radio communication technology. Protocol controller 210 may be structurally embodied as a protocol processor configured to execute protocol stack software (retrieved from a controller memory) and subsequently control the radio communication components of communication device 200 to transmit and receive communication signals in accordance with the corresponding protocol stack control logic defined in the protocol software. Protocol controller 210 may include one or more processors configured to retrieve and execute program code that defines the upper-layer protocol stack logic for one or more radio communication technologies, which can include Data Link Layer/Layer 2 and Network Layer/Layer 3 functions. Protocol controller 210 may be configured to perform both user-plane and control-plane functions to facilitate the transfer of application layer data to and from radio communication device 200 according to the specific protocols of the supported radio communication technology. User-plane functions can include header compression and encapsulation, security, error checking and correction, channel multiplexing, scheduling and priority, while control-plane functions may include setup and maintenance of radio bearers. The program code retrieved and executed by protocol controller 210 may include executable instructions that define the logic of such functions.

Communication device 200 may also include application processor 212 and memory 214. Application processor 212 may be a multi-core CPU, and may be configured to handle the layers above the protocol stack, including the transport and application layers. Application processor 212 may be configured to execute various applications, such as base station management applications, and/or programs of communication device 200 at an application layer of communication device 200, such as an operating system (OS), a user interface (UI) for supporting user interaction with communication device 200, and/or various user applications. The application processor may interface with baseband modem 206 and act as a source (in the transmit path) and a sink (in the receive path) for user data, such as voice data, audio/video/image data, messaging data, application data, basic Internet/web access data, etc. In the transmit path, protocol controller 210 may therefore receive and process outgoing data provided by application processor 212 according to the layer-specific functions of the protocol stack, and provide the resulting data to digital signal processor 208. Digital signal processor 208 may then perform physical layer processing on the received data to produce digital baseband samples, which digital signal processor may provide to RF transceiver 204. RF transceiver 204 may then process the digital baseband samples to convert the digital baseband samples to analog RF signals, which RF transceiver 204 may wirelessly transmit via antenna system 202. In the receive path, RF transceiver 204 may receive analog RF signals from antenna system 202 and process the analog RF signals to obtain digital baseband samples. RF transceiver 204 may provide the digital baseband samples to digital signal processor 208, which may perform physical layer processing on the digital baseband samples. Digital signal processor 208 may then provide the resulting data to protocol controller 210, which may process the resulting data according to the layer-specific functions of the protocol stack and provide the resulting incoming data to application processor 212. Application processor 212 may then handle the incoming data at the application layer, which can include execution of one or more application programs with the data and/or presentation of the data to a user via a user interface.

Memory 214 may embody a memory component of communication device 200, such as a hard drive, solid state drive (SSD), or another such permanent memory device. Although not explicitly depicted in FIG. 2, the various other components of communication device 200 shown in FIG. 2 may additionally each include integrated permanent and non-permanent memory components, such as dynamic RAM (DDR) for storing software program code, buffering data, etc.

In accordance with various aspects provided herein, at least one of baseband modem 206 (e.g. a processor of baseband modem 206) or application processor 212 may perform various aspects disclosed herein, such as performing an RF communication operation, performing or configuring an RF ES operation, or any other associated aspects. For example, at least one of baseband modem 206 or application processor 212 may determine which of the RX paths are to be used for RF ES operation. Alternatively, or additionally, at least one of baseband modem 206 or application processor 212 may selectively perform the RF ES operation or the RF communication operation.

In accordance with some radio communication networks, terminal devices 102 and 104 may execute mobility procedures to connect to, disconnect from, and switch between available network access nodes of the radio access network of radio communication network 100. As each network access node of radio communication network 100 may have a specific coverage area, terminal devices 102 and 104 may be configured to select and re-select available network access nodes in order to maintain a strong radio access connection with the radio access network of radio communication network 100. For example, terminal device 102 may establish a radio access connection with network access node 110 while terminal device 104 may establish a radio access connection with network access node 112. In the event that the current radio access connection degrades, terminal devices 102 or 104 may seek a new radio access connection with another network access node of radio communication network 100; for example, terminal device 104 may move from the coverage area of network access node 112 into the coverage area of network access node 110. As a result, the radio access connection with network access node 112 may degrade, which terminal device 104 may detect via radio measurements such as signal strength or signal quality measurements of network access node 112. Depending on the mobility procedures defined in the appropriate network protocols for radio communication network 100, terminal device 104 may seek a new radio access connection (which may be, for example, triggered at terminal device 104 or by the radio access network), such as by performing radio measurements on neighboring network access nodes to determine whether any neighboring network access nodes can provide a suitable radio access connection. As terminal device 104 may have moved into the coverage area of network access node 110, terminal device 104 may identify network access node 110 (which may be selected by terminal device 104 or selected by the radio access network) and transfer to a new radio access connection with network access node 110. Such mobility procedures, including radio measurements, cell selection/reselection, and handover are established in the various network protocols and may be employed by terminal devices and the radio access network in order to maintain strong radio access connections between each terminal device and the radio access network across any number of different radio access network scenarios.

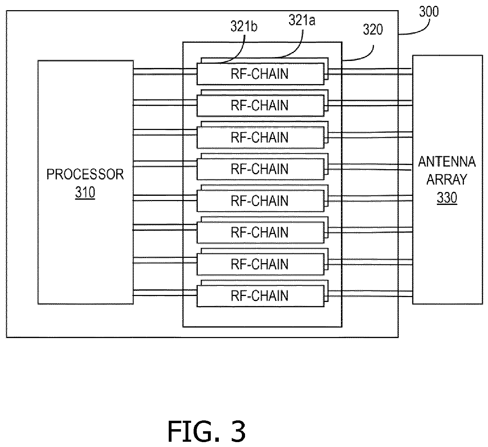

FIG. 3 shows an exemplary illustration of various communication elements of a radio communication device in accordance with various aspects provided herein. The radio communication device 300 may include processing circuitry 310 (e.g. the baseband modem 206) that may control RF operations of radio communication device 300 according to communication protocols associated with the radio access network. Radio communication device 300 may include one or more antennas, which are provided illustratively in this example as an antenna array 330 including a plurality of antennas. Radio communication device 300 may include the antenna array 330, or may include an antenna interface couplable to the antenna array 330. Radio communication device 300 may transmit and receive radio communication signals with the antenna array 330.

In a receive (RX) path, RF chains (i.e. respective RF circuits) of an RF circuitry 320 may receive analog radio frequency signals from one or more antennas of the antenna array. In some examples, each RX path may couple to an antenna port that couples the RX path to multiple antennas of the antenna array 330, which may be referred to as a subarray of the antenna array 330. The respective RF chain may perform analog and digital RF front-end processing on the analog radio frequency signals to produce digital baseband samples (e.g., In-Phase/Quadrature (IQ) samples) to provide to the processing circuitry 310. RF circuitry 320 may include two RF-chains 321a, 321b for each path, each RF-chain may be designated for a polarization for this illustrative example in which each antenna element of the antenna array is configured to two orthogonal polarizations. Alternatively, RF chains 321a, 321b may be derived from the same antenna & polarization, via an RF power splitter for example, and routed to different processing chains. Each RF-chain of the RF circuitry 320 may include analog and digital reception components including amplifiers (e.g., Low Noise Amplifiers (LNAs)), filters, RF demodulators (e.g., RF IQ demodulators)), and analog-to-digital converters (ADCs), which each RF chain may utilize to convert the received radio frequency signals to digital baseband samples.

In a transmit (TX) path, each RF chain of the RF circuitry 320 may receive digital baseband samples from processing circuitry 310 and perform analog and digital RF front-end processing on the digital baseband samples to produce analog radio frequency signals to provide to respective subarrays of the antenna array 330 for radio transmission. Each RF chain of the RF circuitry 320 may thus include analog and digital transmission components including amplifiers (e.g., Power Amplifiers (PAs), filters, RF modulators (e.g., RF IQ modulators), and digital-to-analog converters (DACs), which each RF chain may utilize to mix the digital baseband samples received from processing circuitry 310 and produce respective analog radio frequency signals for radio transmission by the respective subarray of the antenna array 330. In some aspects, the processing circuitry 310 may control the radio transmission and reception of each RF chain of the RF circuitry 320, including specifying the transmit and receive radio frequencies for the operation of the RF circuitry 320.

The processing circuitry 310 may include a digital signal processor (e.g. the digital signal processor 208) which may be configured to operate as a digital front end. The digital signal processor 208 may be configured to perform one or more of error detection, forward error correction encoding/decoding, channel coding, and interleaving, channel modulation/demodulation, physical channel mapping, channel filtering, downsampling or upsampling, radio measurement and search, frequency and time synchronization, antenna diversity processing, power control, and weighting, rate matching/de-matching, retransmission processing, interference cancelation, and any other physical layer processing functions.

In accordance with various aspects provided herein, in particular within the context of RRHs, the processing circuitry 310 may perform some of the functions described for each RF chain. In a disaggregated approach within an RRH, each RF chain may include an RF circuit which may include, in RX path, amplifiers (e.g., Low Noise Amplifiers (LNAs)), filters, impedance matching components (i.e. components closer to antenna port rather than baseband processing), while the processing circuitry 310 may include, within the same RX path, corresponding ADCs, RF down-converters, LOs (i.e. components closer to baseband processing rather than antenna port). Sometimes, the processing circuitry 310 may include an RF IC.

In accordance with various aspects provided herein, the processing circuitry 310 may control each RF chain of the RF circuitry 320 independently. In some examples, the processing circuitry 310 may control whether an RF chain, in particular whether RX path of the respective RF chain, is to be used for an RF communication operation or for an RF ES operation. Based on a determination of whether the RX path of the respective RF chain is to be used for an RF communication operation or for an RF ES operation, the processing circuitry 310 may send control signals to configure the RF chain for the determined operation. In some examples, a control signal may cause the RX path to route the signal for demodulation of received RF signal, or may cause the RX path to route the signal to send the digital data converted from the RF signal within the RX path to another component within the radio communication device 300, or store the digital signal into a memory. In some examples, the processing circuitry 310 may control one or more switches within each RX path of the RF circuitry based on the determination. The routing the signal for demodulation may include causing an RF signal to be down-converted.

In accordance with various aspects provided herein, the processing circuitry 310 may control operation performed for each RF chain of the RF circuitry 320 independently. The processing circuitry 310 may include various components within each RX path and in some examples, the processing circuitry 310 may control whether components within an RX path is to be used for an RF communication operation or for an RF ES operation. Based on a determination of whether the RX path is to be used for an RF communication operation or for an RF ES operation, the processing circuitry 310 may send control signals to configure the respective components for the determined operation. In some examples, a control signal may cause the RX path to route the signal (e.g. RF signal or digital signal converted from a received RF signal) within the RX path for demodulation, or may cause the RX path to route the signal to send the digital data within the RX path to another component within the processing circuitry 310 or within the radio communication device 300, or store the digital signal into a memory. In some examples, the processing circuitry 310 may control one or more switches within each RX path based on the determination.

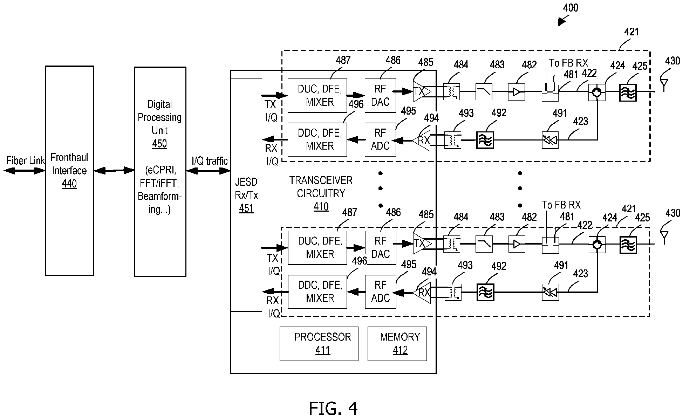

FIG. 4 shows an exemplary illustration of a radio communication device in accordance with various aspects described herein, illustrated as an RRH. The illustrated 400 RRH includes transceiver circuitry 410 including a processor 411, and a plurality of RF chains 421, each RF chain 421 coupled to a corresponding antenna 430 or a subarray or an array of an antenna array. Each RF chain 421 is illustrated to include corresponding RF circuits and a portion of the transceiver circuitry 410, which collectively includes a TX path 422 path and a RX path 423. Only two RF chains 421 are depicted herein, but the RRH may include many RF chains 421 to transmit and receive RF signals, exemplarily, 4, 8, 16, 32, 64, etc. A circulator 424 may couple each corresponding TX path 422 and RX path 423 of the respective RF chain 421 via a bandpass filter 425 to the respective antenna 430.

Each TX path 422 is depicted to include, from right hand side to left hand site, as corresponding RF circuits: a directional coupler 481, a power amplifier 482, a filter 483, a balun 484, and as corresponding portion of the transceiver circuitry 410: a TX amplifier 485, an RF DAC 486, and a DUC, DFE, mixer block 487. Each RX path 422 is depicted to include, from right hand side to left hand site, as corresponding RF circuits: an LNA 491, a bandpass filter 492, a balun 493, and as corresponding portion of the transceiver circuitry 410: an RX amplifier 494, and RF ADC 495, and a DDC, DFE, mixer block 496.

In disaggregated deployment of network access nodes, an RRH may operate with another entity, such as a baseband unit (BBU) or a Distributed Unit and/or a Control Unit (sometimes may be referred to as a central unit or a centralized unit) to process communication data according to a communication protocol stack (e.g. 5G protocol stack), in a manner that the RRH may provide processing of only a portion of the protocol stack. There are many approaches to provide a split of protocol stack among the multiple units.

In one example of a split at the PHY layer, while another entity or entities may be mainly responsible for non-real time operations hosting the radio resource control (RRC) and the control plane of the PDCP protocol and may be responsible for real-time operations hosting, for example, RLC layer functions, MAC layer functions, and Higher-PHY functions. and the RRH 400 may be configured to host the Lower-PHY functions and provide data streams to another entity over a fronthaul interface 440 (e.g. open fronthaul). In a particular split example of PHY layer, which may be referred to as 7.2 split, the Lower PHY layer may be defined to include cyclic prefix (CP) functions, Fast Fourier Transform (FFT) functions, beamforming and port expansion functions, resource element mapping functions, while the Higher PHY layer functions may include precoding on antenna ports, layer mapping, modulation, scrambling, rate matching, coding and block segmentation, cyclic redundancy check (CRC) functions.

The RRH 400 may include a digital processing unit 450 (e.g. a baseband processor) configured to perform at least a digital processing of the protocol stack based on signals received from the transceiver circuitry 420 at receiving, and based on signals received from the fronthaul interface 440 at transmitting. Exemplarily, the digital processing unit 450 may be configured to perform designated Lower PHY layer functions, illustratively for a 7.2 split, the digital processing unit 450 may perform CP functions, FFT functions (i.e. FFT and inverse FFT), beamforming functions, port expansion functions, and resource element mapping functions.

In various examples, the fronthaul interface 440 may be according to a Common Public Radio Interface (CPRI) or an Enhanced Common Public Radio Interface (eCPRI) providing communication between the RRH 400 and another entity over a connection via fiber optic cables, but there are also other communication mediums that may handle the fronthaul communication. The digital processing unit 450 may further be configured to perform communication over the fronthaul interface 440, illustratively according to a CPRI, eCPRI, or an O-RAN (Open RAN) protocol. It is further to be noted that performing of various aspects by the processor 411 of the transceiver circuitry 410 is provided illustratively. In some examples, the digital processing unit 450 may be configured to perform operations described herein for the processor 411 of the transceiver circuitry 410, which the operations are associated with the control of the RF ES operations, including determination of RX paths for RF ES operation, control of the respective switch circuits, etc. For these aspects, the digital processing unit may send corresponding signals via a designated interface, or any existing interface between the digital processing unit 450 and the transceiver circuitry 410.

Illustratively, the digital processing unit 450 may include a layer-1 (L1) baseband ASIC or FPGA configured to perform above-mentioned functions for RF communication signals and for fronthaul interface related functions. In some examples, the digital processing unit 450 may include a multi-core CPU cluster in a Linux-based architecture for non-real time processing. While focused on non-real time operations, these CPU clusters may further include accelerators, and thus can be used for non-real time post processing of captured wideband I/Q samples.

The transceiver circuitry 410 may include units and components to provide further radio communication functions, in some examples independently, for each RF chain 421. The transceiver circuitry 410 may include the remaining portions of the TX paths 422, and the RX paths 423. Illustratively, at each TX path 422, the transceiver circuitry 410 may include a digital front end (DFE) an up-converter (e.g. digital up-converter) and a mixer (i.e. DUC, DFE mixer block 487), the RF digital to analog converter (RF DAC) 486 and the RF amplifier 485. Similarly, at each RX path 423, the transceiver circuitry 410 may include the RF amplifier 494, the RF analog to digital converter (RF ADC) 495, and a digital front end (DFE), a down-converter (e.g. digital down-converter (DDC)) and a mixer (DDC, DFE, mixer block 496). In accordance with various aspects provided herein, each RF ADC within each RX path 423 may convert RF signals received at the RX path 423 from the respective antenna 430 to obtain a digital signal, which sometimes may be referred to as the digital signal converted from the (received) RF signal.

Data communication between the digital processing unit 450 and the transceiver circuitry 410 may be in accordance with a conventional serial data transfer method. Illustratively, the RRH 400 may include a serial data transfer interface 451, such as a data converter serial interface to synchronously provide respective baseband signals between the signal paths (i.e. RX paths, TX paths) and the digital processing unit 450. In some examples, the serial data transfer interface 451 may be a JESD204 interface. Illustratively, the processor 411 may control operation of the serial data transfer interface 451.

For example, for each TX path 422, the digital processing unit 450 may provide a signal including a corresponding in-phase/quadrature (IQ) signal via the serial data transfer interface 451 and the respective DUC, DFE, mixer block 487 of the corresponding TX path 422 may receive the IQ signal for up-conversion and providing the corresponding output signal to the respective RF DAC 486. For each RX path 423, the respective DDC, DFE, mixer block 496 of the respective RX path 423 may receive the digital signal converted from the respective RF signal, and send the corresponding IQ signal via the serial data transfer interface 451 to the digital processing unit 450 for baseband processing.

When an RX path 423 is configured for an RF communication operation, the corresponding DDC, DFE, mixer block may receive the digital signal at the respective RX path 423. When an RX path 423 is configured for an RF ES operation in accordance with various aspects provided herein, the processor 411 may cause the digital signal to be routed to another component of RF ES operation, which is different from the corresponding DDC, DFE, mixer block 496. Illustratively, each RX path 423 may include a switch circuit to cause the digital signal to be provided to the respective DDC, DFE, mixer block 496 of the respective RX path 423 when the respective RX path 423 is configured for RF communication operation, and to cause the digital signal to be provided to an RF ES operation component when the respective RX path 423 is configured for RF ES operation. In some examples, the processor 411 may cause the digital signal to be routed to both another component of RF ES operation and the corresponding DDC, DFE, mixer block 496 when the RX path 423 is configured for an RF communication operation.

In accordance with various aspects provided herein, the RRH 400 (e.g. the processor 411) may configure all RX and TX paths for RF communication operation, such that each RX path 423 of the RX paths or each TX path of the respective RF chain 421 is configured to receive or transmit radio communication signals via the corresponding signal path at one time instance. Furthermore, the processor 411 may determine, for at least for some ES capable RX paths of the all RX paths, which one or more RX paths are to be configured for RF ES operation, corresponding to one or more second signal paths, in which other RX paths configured for RF communication operations are referred to as first signal paths. In other words, at least some of RX paths may be configured to operate in a first state in which the respective RX path is configured for RF communication operation (e.g. cause the digital data to be sent for demodulation) and in a second state in which the respective RX path 423 is configured for RF ES operation (e.g. cause the digital data to be sent to an ES component). The processor 411 may accordingly send control signals to one or more RX paths determined for RF ES operations, illustratively to a respective switch circuit, to cause each one of the one or more RX paths determined for RF ES operation to operate in the second state, which may include the switch circuit routing the respective digital signal to respective RF ES operation components.

In various aspects provided herein, the processor 411 may selectively perform RF ES operation or RF communication operation at each RX path 423, or both simultaneously. The processor 411 may control each RX path 423, such that each RX path 423 capable for performing RF communication operation or RF ES operation performs either RF communication operation or RF ES operation at a time instance, that may be independent from any one of other RX paths of the RX paths. Illustratively, the processor 411 may control an operation of a signal routing component (e.g. a switch device) provided in each RX path 423 to cause each RX path 423 to perform either RF communication operation or RF ES operation independently.

Noting that a direct RF sampled architecture of the RRH 400 as described herein may capture the full RF spectrum within the bandwidth of the RF filters in the RRH 400 line-up, such that the frequency band of each RX path 423 is defined by RF filters 425, 492 provided in that respective RX path 423. The desired signals may be extracted though digital frequency translation and digital filtering as shown in corresponding DDC, DFE, mixer blocks 496. However, at the output of the corresponding RF ADC 495 at each RX path 423, full spectral content within the frequency band of the respective RF filters within the RX path 423 can be available. Illustratively, determination of one or more spectral contents associated with an RX path 423 may include detecting energy in the entire frequency band, which may be defined by one of the filters illustrated herein, namely, within the respective RX path 423, the band-pass filter (BPF) 425 coupled between the antenna 430 and the circulator 424, and the BPF 492 between the LNA 491 and the balun 493.

In some examples, the RF ES operation, for an RX path 423 determined for RF ES operation, may include tapping off the RF ADC 495 of the respective RX path 423, such that the digital signal including unfiltered IQ stream is tapped off and sent to the digital processing unit 450. In response to the determination that a particular RX path 423 is to be used for RF ES operation, the processor 411 may cause the RF ADC 495 to be tapped off and cause the digital signal to be sent to the digital processing unit 450 via the serial data transfer interface 451. The processor 411 may route the digital signal to be sent to the digital processing unit 450 via the serial data transfer interface 451. It is to be noted that at or around that time instance, the serial data transfer interface 451 may further carry communication data including down-converted IQ signals of other RX paths, which the other RX paths 421 simultaneously perform RF communication operation while the particular RX path 423 performs RF ES operation. In this particular example, the digital processing unit 450 may determine one or more spectral contents of the corresponding frequency band of the particular RX path 423 based on the digital signal. Alternatively, the digital processing unit 450 may send the digital signal to another entity over the fronthaul interface 440 and that another entity may complete the spectral sensing.

In some examples, the RF ES operation, for an RX path 423 determined for RF ES operation, may include storing the digital data (e.g. output of the respective RF ADC 495) into a memory 412. Illustratively, the processor 411 may cause the digital data received for a period of time to be accumulated into the memory 412. In some examples, the processor 411 may analyze the digital data stored in the memory 412 to determine one or more spectral contents for the frequency band of the respective RX path 423. In some examples, the processor 411 may cause the digital data stored in the memory 412 to be sent to the digital processing unit 450. Illustratively, the processor 411 may cause the digital data stored in the memory 412 to be sent to the digital processing unit 450 via another data transfer interface that is different from the serial data transfer interface 451. For example, another data transfer interface may be a packet-based data transfer interface, such as a PCI-E interface. In this particular example, the digital processing unit 450 may determine one or more spectral contents of the corresponding frequency band of the particular RX path 423 based on the digital signal. Alternatively, the digital processing unit 450 may send the digital signal to another entity over the fronthaul interface 440 and that another entity may complete the spectral sensing.

In accordance with various aspects described herein, operations of RX paths, more precisely whether an RX path 423 is configured for RF communication operation or RF ES operation may be based on allocation and scheduling of radio communication operations. In other words, in some examples, the processor 411 may select one or more RX paths from the RX paths to configure for RF ES operation based on a received request, which may be from upper layers of the protocol stack, or a received request independent from the protocol stack (e.g. a request of ESC for certain frequency bands, etc.). In some examples, the processor 411 may select one or more RX paths from the RX paths to configure for RF ES operation based on scheduled radio communication operations.

Illustratively, in an intense radio communication scenario, the RRH 400 may use all RF chains 421 (either via respective RX paths 423 or TX paths 422) to perform radio communication operations, i.e. to transmit or receive radio communication signals to or from mobile radio communication devices (i.e. UEs) wirelessly connected to the RRH 400. Accordingly, each RF chain 421 and respective signal path of the RF chain 421 may be scheduled to transmit and/or receive radio communication signals in accordance with scheduled radio communications to be performed by the RRH 400. The schedule of radio communications to be performed may be stored in a memory (e.g. the memory 412), which the schedule information may represent, at least, one or more instances or periods of time, in which each RF chain 421 is scheduled for an RF communication operation.

The processor 411 may, based on scheduled radio communication operations, select one or more RF chains, or illustratively RX paths, with which the RRH 400 may perform RF ES operations. Illustratively, when the processor 411 identifies that an RX path 423 is not scheduled for RF communication operation, exemplarily for at least a predefined period of time, the processor 411 may determine to perform RF ES operation using that RX path 423. Accordingly, by routing the digital data of that RX path 423 at the corresponding period of time, either RRH 400 or another entity connected to the RRH 400 may determine one or more spectral contents for the frequency band configured for that path. Further operations associated with scheduled radio communication operations are described in this disclosure.

In some examples, the processor 411 and the memory 412 may be configured to provide its functions to respectively process and store the digital signal in a TEE. Illustratively, when the processor 411 analyzes the digital signal to determine one or more spectral contents, the processing of the digital signal may be performed in the TEE. In some examples, the processor 411 may cause data communication within the RRH 400 or out of RRH 400 through the fronthaul interface 440 through encryption. The memory 412 may also store the digital signal in a secure enclave. Further operations associated with a secure approach to the digital signal are also described in this disclosure.

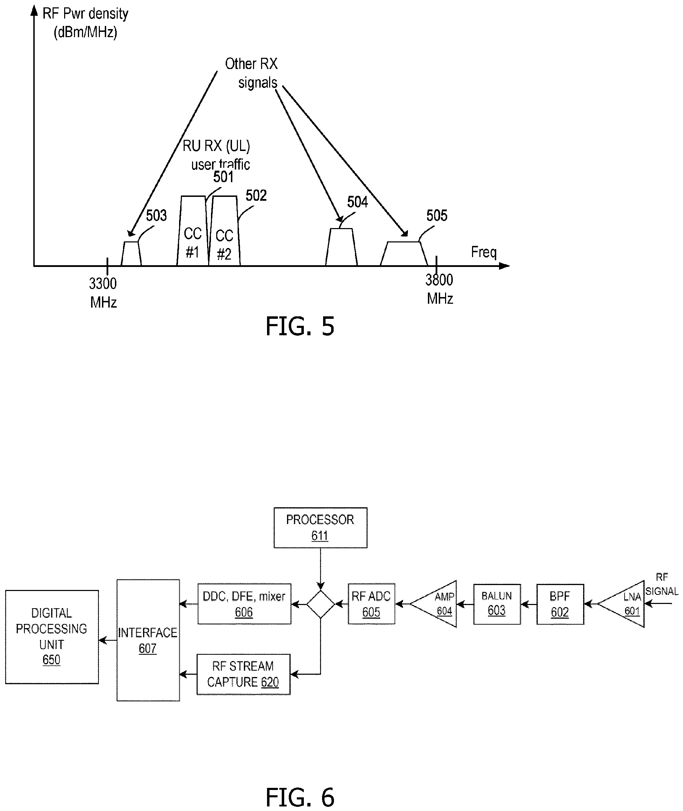

FIG. 5 shows an exemplary illustration of RF energy detectable via an RF ES operation, which a radio communication device (e.g. RH 400, the radio communication device 300) may perform in accordance with various aspects described herein. Y-axis of the graph represents RF power density (dBm/MHz) and X-axis represents frequency. The graph illustrates, particularly, detected RF energy in n78 frequency band in 5G NR. Illustratively, 501 and 502 represent uplink traffic at the radio communication device and 503, 504, 505 represent other RF signals within the same frequency band. Exemplarily, detected RF signals 501, 502, 503, 504, 505 may have cross interference with each other, and other RF signals may be RF signals within the same radio environment, which may illustratively include RF communication signals of other base stations (e.g. other RRHs), military radars, etc.

FIG. 6 shows an exemplary illustration of an RX path in accordance with various aspects described herein. Illustratively, described in accordance with the path followed by a received RF signal, the RX path (e.g. the RX path 423) may be within an RF chain (e.g. the RF chain 421) described for the radio communication device 300 or the RRH 400. For example, the RRH 400 may include at least one RX path as described herein for an RX path. Accordingly, the corresponding RF chain 421 and the transceiver circuitry 410 of the RRH 400 may include components described below.

The RX path may include an LNA 601 to be coupled to a duplexer (e.g. an RF circulator) coupled to an antenna associated with the RX path to receive RF signal received by the antenna. Received RF signal may be filtered by a first bandpass filter. The LNA 601 may amplify received RF signal and output amplified signal to a second bandpass filter 602. It is to be noted that the collective filtering of the first bandpass filter and the second bandpass filter 602 may define the frequency band of the RX path. The second bandpass filter 602 may output filtered RF signal to a balun 603 that may couple the unbalanced signal line into balanced signal lines input to an RX amplifier 604. The RX amplifier 604 may provide output RF signal into an RF ADC 605 that may convert the output RF signal into a digital signal.

The RX path may operate in a first state in which the RX path provide the digital signal at the output of the RF ADC 605 to the DDC, DFE, mixer block. The RX path may operate in a second state in which the RX path provide the digital signal at the output of the RF ADC 605 to an RF ES operation component, which is depicted as an RF stream capture unit 620. In the second state, the RF stream capture unit 620 may receive the digital signal and route the digital signal to be sent to a digital processing unit 650 over a data converter serial interface 607. Exemplarily, the digital signal may include unfiltered real RF samples or unfiltered IQ signal, which is converted from analog RF signal at the input of the RF ADC 605, which is an RF signal within the frequency band defined by the first bandpass filter and the second bandpass filter 602.

Illustratively, when a corresponding processor 611 (e.g. the processor 411) controlling the RF ES operation determines to perform RF ES operation with the RX path, the processor 611 may cause the RF stream capture unit 620 to receive the digital signal from the RF ADC 605. The processor 611 may further activate the RF stream capture unit 620 based on the determination to cause the RF stream capture unit 620 to send the digital data over the data converter serial interface 607 to the digital processing unit 650. The digital data may be tapped off accordingly from the portion of the RX path connecting the RF ADC 605 to the DDC, DFE, mixer block, from the output of the RF ADC 605 including unfiltered real RF samples, and the RF stream capture unit 620 may feed the digital data to the digital processing unit 650 via the data converter serial interface 607.

For an effective RF sampling, the sampling rate ($F_s$) of the RF ADC 605 may be at least the twice of the highest frequency of the frequency band ($f_{c,max}$) of the RX path. Noting that an oversampling ratio ($OSR_{margin}$) greater than one is taken with respect to the Nyquist rate, the sampling rate of the RF ADC 605 may be formulated as:

$$F_s \geq 2 * OSR_{margin} * f_{c,max}$$

For example, in 5GNR n79 frequency band, that spans 4.4-5 GHz, and with $OSR_{margin}$ of 1.2, minimum sampling rate of the RF ADC 605 may be 12 Giga-Samples per second (GSPS). Illustratively, the RF stream capture unit 620 may inject the digital data of 12 GSPS unfiltered RF samples into the data traffic of the data converter serial interface 607 to send the digital data to the digital processing unit 650. With a configuration of RF ADC 605 with 13-bit resolution, and assuming that the radio communication device includes two of such RX paths as described herein performing RF ES operation within two channels, 12 GSPS samples with 13-bit resolution and 2 channels, the amount of digital data to be transferred via the data converter serial interface 607 becomes 312 Gbps, which may be a fairly large payload, but particularly for UL direction, there may be such capacity to convey the digital data through the data converter serial interface 607.

In accordance with various aspects described herein, the digital data may include subsampled data, or in some examples the sampling rate of the RF ADC 605 may be configured for a sampling rate that is lower than the sampling rate described above. Given that the frequency band of the RX path may be band-limited by RF front end filters, only the RF ADC 605 may sample with a sampling rate corresponding frequency band while considering aliasing effects. Illustratively, the frequency band being defined between $f_{c,max}$ and $f_{c,min}$, the Nyquist formula may become:

$$F_s \geq 2 * OSR_{margin} * (f_{c,max} - f_{c,min})$$

Noting that this sampling rate would result in, within 5G NR n79 frequency band, a sampling rate of 1.44 GHz. If the Fs of 12 GSPS is used, it may result in no aliasing, and the RF samples may still represent the actual frequency spectrum within the frequency band.

It is to be noted that instead of the aspects described above, the RF ADC 605 may be configured to use 2nd or higher order Nyquist zones. This may allow for lower rate RF ADCs, at the expense of more complex signal processing, such as accounting for aliases from other bands.

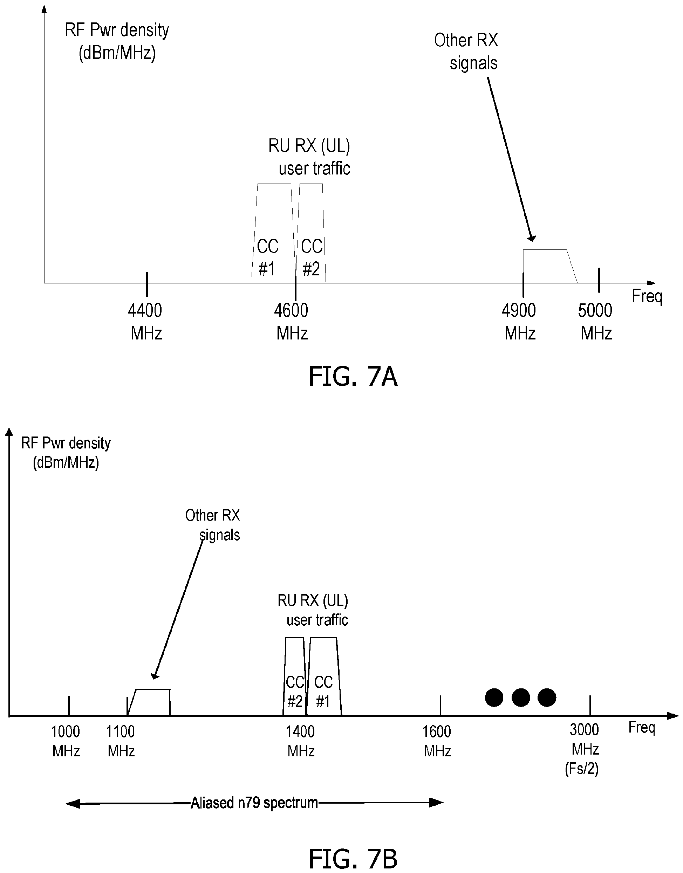

FIG. 7A and FIG. 7B shows examples of representations of a detection within n79 frequency band for a sampling rate at 12 GSPS and 6 GSPS respectively. Assuming that the desired user traffic is at first component carrier has a bandwidth of 50 MHz, and at a second component carrier has a bandwidth of 30 MHz, and there are other RF signals within the frequency band. In FIG 7A with the sampling rate with 12 GSPS while there is no aliasing, in FIG. 7B, it can be seen that there is aliasing, and band-limited frequency spectrum is mirrored around the Nyquist Fs/2 frequency of 3000 MHz Processing this aliased spectrum is not a problem, however, the processor 611 may apply conventional digital processing methods to perform un-mirroring, which the resulting data may still provide sufficient representation of the frequency band for the RF ES operation. Accordingly, as long as the Fs equation above is satisfied, the data rate required to send the digital data over the data converter serial interface may be reduced.

In some examples, the processor 611 may apply conventional signal processing methods over the digital data to reduce the amount of the digital data. Illustratively, the processor may digitally translate the desired spectrum to a complex baseband equivalent spectrum thus allowing a much reduced sample rate to be used while not compromising on the accuracy of estimation of the spectral content. For example, the full n79 frequency band can be translated to be centered around 0 Hz by digital complex mixing. This downmixed signal can then be down-sampled (decimated) to the sample rate to assure that the desired bandwidth fits within the $2 * OSR_{margin} * (RF_{bandwidth}/2)$. Illustratively, the RF bandwidth is 600 MHz so a sample rate of $OSR_{margin}*600$ MHz may be used.

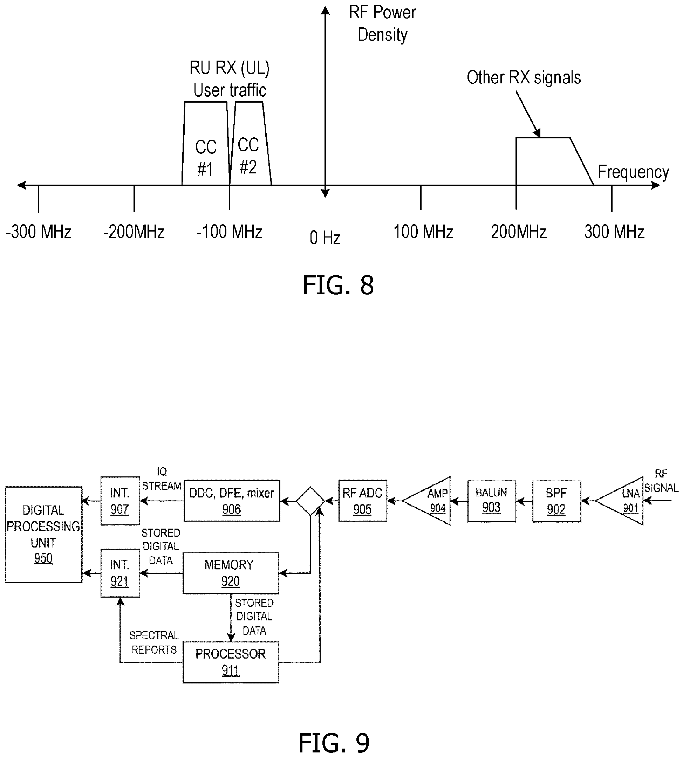

FIG. 8 shows an exemplary illustration of a down-sampled spectrum. It is to be also noted that the processor 611 may perform the digital down-mixing function and associated decimation stages which the processor 611 may use to capture digital data as described herein for the purpose of RF ES operation. Accordingly, the data rate required to transfer the digital data to the digital processing unit 650 can be reduced using a lower rate RF ADC. Illustratively, in accordance with conventional 5G NR sampling rates of 122.88 MSPS per 100 MHz of the frequency band, the data rate required to capture the complex signal may be formulated below, $R_{ES}$ denoting data rate, $RF_{bandwidth}$ denoting the frequency band, $Interface_{overhead}$ denoting the overhead of data transfer, $IQ_{resolution}$ denoting resolution of IQ samples:

$$R_{ES} = \frac{RF_{bandwidth}}{100\ MHz} * 122.88 * 10^6 * Interface_{overhead} * IQ_{resolution} * Num\_channels$$

In the example of n79 frequency band with 32 IQ resolution (i.e. 16-bit fixed point per sample) and 66/64 JESD204 interface overhead, for the frequency band of 600 MHz with two channels, the result would be 48.66 Gbps, which is still much lower than the 312 Gbps in direct RF sampling up to 5 GHz. It is further to be noted that for less communication overhead, a decimator may decimate the RF samples.

FIG. 9 shows an exemplary illustration of an RX path in accordance with various aspects described herein. Illustratively, described in accordance with the path followed by a received RF signal, the RX path may be within an RF chain described for the radio communication device 300 or the RRH 400. For example, the RRH 400 may include at least one RX path as described herein for an RX path. Accordingly, the corresponding RF chain 421 and the transceiver circuitry 410 of the RRH 400 may include components described below. In some examples, the RX path illustrated herein may coexist with one or more RX paths described in accordance with FIG. 6 within a radio communication device.

The RX path may include an LNA 901 to be coupled to a duplexer (e.g. an RF circulator) coupled to an antenna associated with the RX path to receive RF signal received by the antenna. Received RF signal may be filtered by a first bandpass filter. The LNA 901 may amplify received RF signal and output amplified signal to a second bandpass filter 902. It is to be noted that the collective filtering of the first bandpass filter and the second bandpass filter 902 may define the frequency band of the RX path. The second bandpass filter 902 may output filtered RF signal to a balun 903 that may couple the unbalanced signal line into balanced signal lines input to an RX amplifier 904. The RX amplifier 904 may provide output RF signal into an RF ADC 905 that may convert the output RF signal into a digital signal.

The RX path may operate in a first state in which the RX path provide the digital signal at the output of the RF ADC 905 to the DDC, DFE, mixer block 906. The RX path may operate in a second state in which the RX path provide the digital signal at the output of the RF ADC 905 to an RF ES operation component, which is depicted as a memory 920 configured to store the digital data. In the second state, the memory 920 may receive the digital signal including RF samples and store in the memory for a period of time. In some examples, the processor 911 may cause the stored digital signal to be sent to a digital processing unit 950.

It is to be noted that although RF samples can still be conveyed via a data converter serial interface 907 present between the transceiver circuitry and the digital processing unit used to stream baseband data for RF communication, a packet based communication interface 921, such as PCIe interface, or any other interface presently used between the transceiver circuitry and the digital processing unit 950. Correspondingly, the processor 911 may encode the stored digital data in accordance with the packet based communication interface protocol, and the digital processing unit 950 may decode the encoded digital data to obtain information representing RF samples.

Illustratively, the minimum capacity of the memory 920 can be calculated in accordance with the equation: Memory_size_Mbytes) = Num_symbols * Symbol_time_usec * ADC_resolution * Fs_GSPS * 1000 * Number_of_channels/(8*1024$^2$), Num_symbols denoting number of symbols, Symbol_time_usec denoting the symbol time within microseconds, ADC_resolution denoting the resolution of the RF ADC 905, Fs_GSPS denoting the sampling rate of the RF ADC 905, and Number_of_channels denoting the number of channels of which respective digital data are to be sent to the digital processing unit 950. With a numerical example of 12 GSPS sampling rate of RF ADC 905 with 14 bit resolution, to capture RF data for four channels and three symbols, each with a duration of 17.86 microseconds, the memory size would result in 4.3 Mbytes. Accordingly, the processor 911 may use the packet based communication interface to send the stored digital data.

In an illustrative example of the packet based communication interface being PCIe interface, the required transfer time to send the digital data over the PCIe interface can be approximately calculated using the formula, RF_data_transfer_time_usec $\approx 10^6$ * Memory_size_Mbytes * 8 * 1024$^2$/(PCIE_speed_Gbps*10$^9$), noting that the formula does not account for PCIe overhead. For example, for 4.3 Mbytes of RF data samples with PCIe Gen-5 interface having 32 Gbps data rate, the required transfer time may be approximately 1.1ms.

In some examples, the processor 911 may analyze the stored digital data to determine spectral contents indicated by the RF samples. The processor 911 may identify and additionally or alternatively characterize the spectral contents within the received RF signal. The processor 911 may use conventional methods to perform determine the spectral contents. Illustratively, the processor may use a series of designated algorithms and mathematical techniques, by delving into the digital data and scrutinizing the digital data to discern various frequency components present in the RF signal. For example, the processor 911 may assess at least one of the amplitude, frequency, and time-domain characteristics extractable from the digital representation of the RF signal to identify the spectral constituents. It is to be noted that aspects described herein for the processor 911 with respect to determination of spectral contents may be performed by another processor within the radio communication device (e.g. the digital processing unit 950) or another entity connected to the radio communication device, within the context of analysis of digital data to determine one or more spectral contents.

Illustratively, the processor 911 may, to identify spectral contents, employ various techniques such as Fast Fourier Transform (FFT) and spectral analysis, which may enable the processor 911 to convert time-domain RF samples into their frequency-domain representations. Through transformed samples, the processor 911 may identify, particularly, frequency distribution, amplitudes, and phase relationships associated with the spectral components within the designated frequency band. The processor 911 may then evaluate these characteristics to identify peaks, valleys, and patterns within the spectrum. In some examples, the result may include a comprehensive spectral profile that provides valuable insights into the RF signal's content, including the presence of interference, modulation schemes, and signal occupancy. In some examples, the output of the analysis may be presented as a spectral report of the frequency band, preferably within a designated sampling time.

In accordance with various aspects described herein, the processor 911 may be implemented by a central processing unit (CPU), a graphics processing unit (GPU), or a hardware acceleration unit (e.g. one or more dedicated hardware accelerator circuits (e.g., ASICs, FPGAs, and other hardware)). In some examples, the processor 911 may be implemented with a clustered architecture, such as a VEX (Very Long Instruction Word (VLIW) Example) architecture, which may issue multiple instructions in parallel for parallel processing. In some examples, the VEX architecture may perform the above-mentioned analysis of the digital data to determine spectral components, and to generate the corresponding spectral report of the frequency band. In some examples, the processor 911 may further perform post-processing operations, and/or send the spectral report of the frequency band to upper layers of the protocol stack.

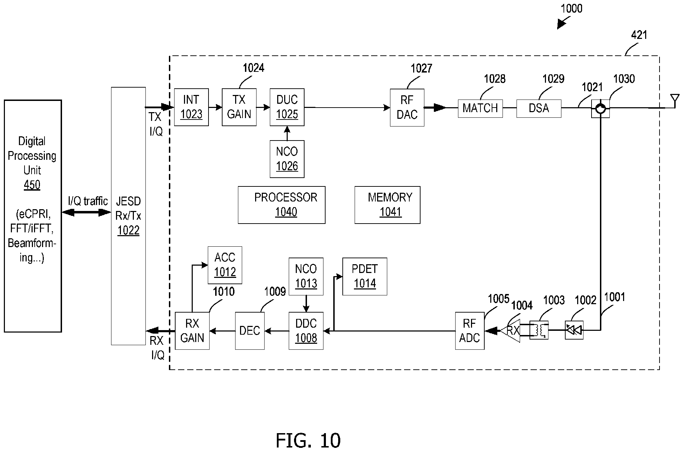

FIG. 10 shows an exemplary illustration of a signal path between an antenna and a digital processing unit configured to process baseband signals. The signal path illustrated herein includes an RX path 1001 and a TX path 1021. Illustratively, described in accordance with the path followed by a received RF signal, the signal path including the RX path and the TX path may be within an RF chain described for the radio communication device 300 or the RRH 400. For example, the RRH 400 may include at least one signal path as described herein for signal path including an RX path and a TX path connectable to the same antenna. Accordingly, the corresponding RF chain 421 and the transceiver circuitry 410 of the RRH 400 may include components described below. In some examples, the RX path 1001 and TX path 1021 illustrated herein may coexist with one or more RX paths described in accordance with FIG. 6 and/or FIG. 9 within a radio communication device.

The RX path 1001 may include an LNA 1002 to be coupled to a duplexer (e.g. an RF circulator) coupled to an antenna associated with the RX path to receive RF signal received by the antenna. Received RF signal may be filtered by a first bandpass filter. The LNA 1002 may amplify received RF signal and output amplified signal to a balun 1003 that may couple the unbalanced signal line into balanced signal lines input to an RX amplifier 1004. The RX amplifier 1004 may provide output RF signal into an RF ADC 1005 that may convert the output RF signal into a digital signal.

In this illustrated example, the portion between the RF ADC 1005 and respective interface circuit is described in more detail. The RF ADC 1005 may output converted RF signal to a DDC 1008. The DDC 1008 may receive the digital signal converted by the RF ADC 1005 and output the digitally down-converted signal into a decimation block 1009 that outputs the decimated signal to an RX gain block 1010. The output of the RX gain block 1010 may be coupled to the interface circuitry 1022 configured to communicate via a data converter serial interface (e.g. JESD204) with the digital processing unit. In some examples, the RX path may further include an accumulation block 1012, a numerically controlled oscillator 1013 for the DDC 1008, and a power detector (PDET) 1014.

The interface circuit 1022 may provide baseband data (e.g. IQ stream) to an interpolator 1023 of the TX path. A TX gain block 1024 may receive interpolated signal from the interpolator and provide output to a digital up-converter (DUC) 1025. Another NCO 1026 may provide oscillator signal for the up conversion to the DUC 1025. An RF DAC 1027 may receive the output of DUC 1025 and provide analog RF signal through a matching network 1028 and a digital step attenuator 1029 to the duplexer 1030.

In some examples, in particular when RF ES operation may include a detection of an in-channel interference (i.e. detecting whether in-channel interference is present), the processor may determine to perform RF ES operation in a manner that the RF ES operation is performable during scheduled TX or RX symbols, or selectively instead of RF communication operation as described above where there are no TX or RX symbols are designated to be sent via the signal path.

In accordance with various aspects described herein, the processor 1040 may cause digital signal converted from received RF signal to be stored in the memory 1041 for RF ES operation. In some examples, the digital signal may include RF samples as described above. In such an example, the processor 1040 may route the signal at the output of the RF ADC 1005 or from anywhere between the output of the RF ADC 1005 and the DDC 1008. Accordingly, through analysis of the RF ES operation, in a wideband approach spectral contents may be identified for the respective frequency band of the RF chain. In some examples, the digital signal to be stored in the memory 1041 may include IQ signals after the down conversion of the DDC 1008, preferably from the output of the RX gain block 1010 taken between the RX gain block 1010 and the interface circuitry 1022. Through in-channel capture via the IQ signals and analysis of the RF ES operation, in an in-channel approach spectral contents may be identified for a narrower frequency band corresponding to frequency band of unfiltered IQ signals.

In accordance with various aspects described herein, the RX path 1001 may operate in a first state in which the RX path provide the digital signal at the output of the RF ADC 1005 to the DDC 1008. The RX path 1001 may operate in a second state in which the RX path 1001 provide signal at the output of the RF ADC 1005 as the digital signal to be stored in the memory 1041. Accordingly, the digital signal stored in the memory 1041 may include RF samples of RF signal at the input of the RF ADC 1005.

In accordance with various aspects described herein, the RX path 1001 may operate in a first state in which the RX path provide down-converted signal at the output of the DDC 1008 for baseband processing to the digital processing unit. The RX path 1001 may operate in a second state in which the RX path 1001 provide down-converted signal at the output of the DDC 1008 (e.g. at the output of the DDC, at the output of the decimation block 1009, at the output of the RX gain block 1010) to be stored in the memory 1041. Accordingly, the digital signal stored in the memory 1041 may include down-converted IQ samples of RF signal at the input of the RF ADC 1005.

In some examples, the processor 1040 may analyze the stored digital data to determine spectral contents indicated by the stored digital data. The processor 1040 may identify and additionally or alternatively characterize the spectral contents within the received RF signal. The processor 1040 may use conventional methods to perform determine the spectral contents. Illustratively, the processor may use a series of designated algorithms and mathematical techniques, by delving into the digital data and scrutinizing the digital data to discern various frequency components present in the RF signal. For example, the processor 1040 may assess at least one of the amplitude, frequency, and time-domain characteristics extractable from the digital representation of the RF signal to identify the spectral constituents. It is to be noted that aspects described herein for the processor 1040 with respect to determination of spectral contents may be performed by another processor within the radio communication device (e.g. the digital processing unit 950) or another entity connected to the radio communication device, within the context of analysis of digital data to determine one or more spectral contents.

Illustratively, the processor 1040 may, to identify spectral contents, employ various techniques such as Fast Fourier Transform (FFT) and spectral analysis, which may enable the processor 1040 to convert time-domain RF samples into their frequency-domain representations. Through transformed samples, the processor 1040 may identify, particularly, frequency distribution, amplitudes, and phase relationships associated with the spectral components within the designated frequency band. The processor 1040 may then evaluate these characteristics to identify peaks, valleys, and patterns within the spectrum. In some examples, the result may include a comprehensive spectral profile that provides valuable insights into the RF signal's content, including the presence of interference, modulation schemes, and signal occupancy. In some examples, the output of the analysis may be presented as a spectral report of the frequency band, preferably within a designated sampling time.

In accordance with various aspects described herein, the processor 1040 may be implemented by a central processing unit (CPU), a graphics processing unit (GPU), or a hardware acceleration unit (e.g. one or more dedicated hardware accelerator circuits (e.g., ASICs, FPGAs, and other hardware)). In some examples, the processor 1040 may be implemented with a clustered architecture, such as a VEX (Very Long Instruction Word (VLIW) Example) architecture, which may issue multiple instructions in parallel for parallel processing. In some examples, the VEX architecture may perform the above-mentioned analysis of the digital data to determine spectral components, and to generate the corresponding spectral report of the frequency band. In some examples, the processor 1040 may further perform post-processing operations, and/or send the spectral report of the frequency band to upper layers of the protocol stack.

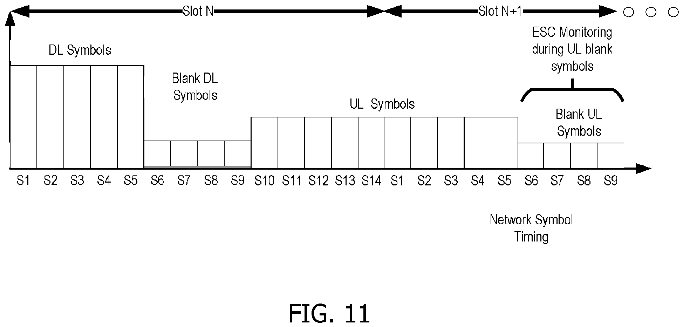

FIG. 11 shows an exemplary illustration of a time-domain schedule of a signal path as described in this disclosure. The depicted illustration shows an exemplary TDD schedule of radio communications to be performed for a signal path including an RX path (e.g. the RX path 1001 and a TX path (e.g. the TX path 1021). The RX path and the TX path may be within an RF chain described for the radio communication device 300 or the RRH 400. For example, the RRH 400 may include at least one signal path as described herein for signal path including an RX path and a TX path connectable to the same antenna. Accordingly, the corresponding RF chain 420 and the transceiver circuitry 410 of the RRH 400 may include components described below. In some examples, the RX path and TX path illustrated herein may coexist with one or more RX paths described in accordance with FIG. 6, FIG. 9, and/or FIG. 10 within a radio communication device.

It is to be noted that as an example, in conventional methods, CBRS spectrum may be captured via RF signals for analysis of spectrum without explicit knowledge of LTE or NR TDD schedule. Illustratively, in an example in which the radio communication device is a base station (e.g. the RRH 400), the radio communication device may store information representative of scheduled radio communication operations in a memory and schedule RF ES operations based on the scheduled radio communication operations. Illustratively, the schedule information stored in the memory may represent time information in which the radio communication device is to perform RF communication operation with the signal paths of the radio communication device. More precisely, the schedule information may include a real-time TDD schedule for each designated time slot, and accordingly, the radio communication device may schedule signal paths to perform RF ES operations where there are no RF communication is to be performed within a particular time slot.

Illustratively, time domain schedule information is provided for a 5G NR RRH, in which a first time slot and a portion of a second time slot is exemplified. Each time slot may include 14 time domain resources (i.e. OFDM symbols in 5G NR). It is to be noted that in 5G NR or LTE, the TDD pattern across an operator's network commonly uses a fixed schedule, such as two time slots of downlink (DL), one "mixed slot" with DL symbols and guard period and UL symbols, and then an UL slot which the RRH may use for Physical Uplink Shared Channel (PUSCH) (user UL data), Physical Uplink Control Channel (PUCCH) (user control data), and Physical Random Access Channel (PRACH) (UE random access procedure to allow UE to obtain resources. As the system loading decreases, unneeded DL or UL symbols may be changed to "blank" symbols (no DL or UL) on a per slot basis to save power. It has to be noted that, to avoid interference with other cells, the RRH may not dynamically change a DL symbol to an UL symbol, but only to a blank symbol, and similarly the RRH may not dynamically change an UL symbol to a DL symbol.

A possible TDD pattern is illustrated in FIG. 11, showing symbols S1-S5 of time slot N are scheduled for DL operation of RF communication operation and symbols S6-S9 of time slot N are blank DL symbols, in which the RRH will not transmit or receive RF communication signals with the signal path. Symbols S10-S14 of the time slot N and symbols S1-S5 of time slot N+1 are scheduled for UL operation of RF communication operation and symbols S6-S9 of time slot N+1 are not scheduled for any RF communication operation. In accordance with various aspects provided herein, a processor (e.g. the processor 1040) of the RRH may schedule RF ES operation in period of time in which the RRH is not scheduled to perform RF communication operation. Illustratively, the RRH may perform RF ES operation in symbols S6-S9 of time slot N, or preferably in symbols S6-S9 of time slot N+1. In various examples, the processor may schedule both RF communication operation and RF ES operation in time domain segmented within a plurality of time durations for each signal path, such that RF communication operations are prioritized (i.e. have higher priority) over RF ES operations.

In accordance with various aspects provided herein, the processor may schedule RF ES operations for an RX path only during the blank UL symbols (i.e. uplink time slots in which no RF communication operations are scheduled). Accordingly, the RRH may avoid or reduce in-channel interference from expected UE UL traffic. It is to be noted that the number of blank UL symbols may change from one UL (or mixed) slot to another, causing performance of RF ES operations to be dynamic based on scheduled radio communication operations. Even in the busiest time of day, however, some blank symbols may be expected. Scheduling of RF ES operations during known blank UL periods may maximize the likelihood that unexpected interferers such as Navy radar or "rogue" (unauthorized) signals may be detected. It is especially relevant for the in-channel approach where the focus would be to detect these unexpected interferers.

In accordance with aspects provided herein, the RX path 1001 may be configured for both in-channel approach (i.e. the digital signal including IQ samples) and for wideband approach (i.e. the digital signal including RF samples). Illustratively, in the second state the RX path 1001 either provides signal at the output of the RF ADC 1005 or from anywhere between the RF ADC 1005 and the DDC 1008 as the digital signal to be stored in the memory 1041, which is referred to as wideband mode, or provides down-converted signal at the output of the DDC 1008 (e.g. at the output of the DDC, at the output of the decimation block 1009, at the output of the RX gain block 1010) as the digital signal to be stored in the memory 1041, which is referred to as in-channel mode. The processor 1040 may determine which one of in-channel mode or wideband mode is to be used.

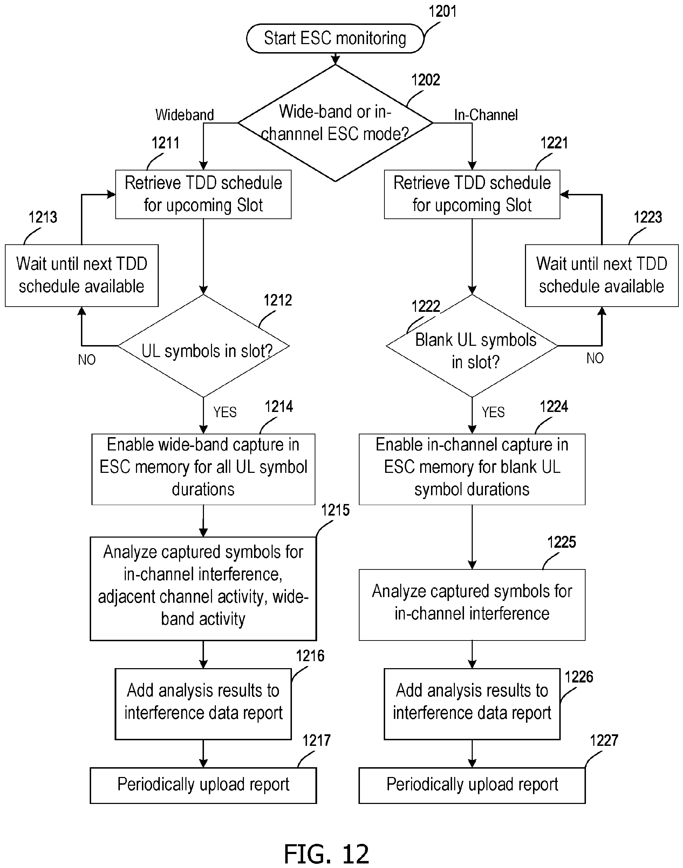

FIG. 12 shows an example of a flow chart that a radio communication device may use in accordance with various aspects described herein. In 1201, the processor 1040 determines to perform RF ES operation with the RX path 1001. In 1202, the processor 1040 may determine whether to perform RF ES operation with wideband mode or with in-channel mode.

If the processor 1040 determines to perform RF ES operation in wideband mode, the processor 1040 may obtain 1211 schedule information stored in a memory (e.g. the memory 1041), the schedule information representing schedule of radio communication operations to be performed with the signal path including the RX path 1001. The processor 1040 may determine 1212 if there is any UL symbols to be received in one or more time slot(s). If no UL time slots exist, the processor 1040 may wait 1213 until next TDD schedule (one or more scheduled UL time slots). If one or more UL time slots are scheduled for reception, the processor 1040 may cause 1214 the RX path 1001 to operate in the wideband mode. Illustratively, the processor 1040 may control switch devices routing the digital signal as described above for the wideband mode to be stored in the memory 1041. For example, switch devices may be coupled to at least one of the output of the DDC 1008, between the DDC 1008 and the decimation block, between the DDC 1008 and the RX gain block 1010, anywhere between the DDC 1008 and the interface circuitry 1022, which can route the down-converted signal received at the switch device to be stored in the memory 1041.

In 1215, the processor 1040 may analyze the digital signal including captured symbols (IQ samples or RF samples) and determine one or more spectral contents within the frequency band. In some examples, the determination of one or more spectral contents may include determining in-channel interference, adjacent channel activity, or wideband activity within the frequency band. In 1216 the processor 1040 may generate a corresponding spectral report, and in 1217 the processor 1040 may cause the generated spectral report to be sent to an entity that is going to use the spectral report (e.g. digital processing unit, another entity within the network, etc.).

If the processor 1040 determines to perform RF ES operation in in-channel mode, the processor 1040 may obtain 1221 schedule information stored in the memory (e.g. the memory 1041), schedule information representing schedule of radio communication operations to be performed with the signal path including the RX path 1001. The processor 1040 may determine 1222 if there is any blank UL symbols scheduled for the RX path 1001. If no blank UL time slots exist, the processor 1040 may wait 1223 until next TDD schedule (one or more scheduled blank UL time slots). If one or more blank UL symbols are scheduled for the RX path 1001, the processor 1040 may cause 1224 the RX path 1001 to operate in the in-channel mode for a period of time (e.g. during the duration of blank UL time slots). Illustratively, the processor 1040 may control switch devices routing the digital signal as described above for the in-channel mode to be stored in the memory 1041. For example, switch devices may be coupled to the output of the RF ADC 1005, or anywhere between the DDC 1008 and the output of the RF ADC 1005, which can route the sampled RF signal to be stored in the memory 1041.

In 1225, the processor 1040 may analyze the digital signal including captured RF samples and determine one or more spectral contents within the frequency band. In some examples, the determination of one or more spectral contents may include determining in-channel interference. In 1226 the processor 1040 may generate a corresponding spectral report, and in 1227 the processor 1040 may cause the generated spectral report to be sent to an entity that is going to use the spectral report (e.g. digital processing unit, another entity within the network, etc.).

Aspects described herein for blocks 1201, 1202, 1215, 1216, 1217 may take place as non-real time operation, while aspects described for blocks 1211, 1212, 1213, 1214, 1221, 1222, 1223, and 1224 may take place in real-time.

It is to be noted that, for in-channel mode the processor 1040 may capture data only during blank UL symbols. Another example may include performing the described RF ES operation for the in-channel mode during UL symbols dedicated to PRACH, as UEs may not actually transmit PRACH during the allocated symbol, and even if they do, only a portion of the channel spectrum may be used. This may particularly be important as for RX symbol occurrences where no user data traffic, control data, or PRACH opportunities are scheduled in the operators' channels, setting the RX front end automatic gain control (AGC) cutback to a minimum value, may result in getting max sensitivity for the other spectrum being monitored. The processor 1040 of the digital processing unit 450 may configure AGC parameters accordingly.

In the wideband mode, the RF ES operation may occur during any UL symbol in the slot. This may allow for detection of adjacent channel traffic or any other traffic/interferers in the band. If only a portion of the frequency band is of interest, the processor 1040 may apply down channel/decimation of the spectrum to reduce processing complexity, as described in various aspects of this disclosure. In some examples, using existing down-mix and decimation of the filter chain present in the RX path 1001 to apply down channel/decimation of the spectrum may result in a lower overhead. Potentially, the processor 1040 may perform adjacent channel spectrum capture, and if there is a detected absence of RF activity in adjacent channels, the processor 1040 may can reconfigure the transceiver to relax adjacent channel selectivity (ACS) and adjacent channel leakage ratio (ACLR). In some examples, the processor 1040 may adjust one or more parameters of the ACS configuration or one or more parameters of the ACLR configuration based on the output of the RF ES operation (i.e. determined spectral contents) for power saving. The wideband mode may provide the most flexibility for post-processing, as down-conversion, filtering, and zoom in on specific sub-bands may be possible. On the other hand, the in-channel capture mode may involve less power consumption and processing, since the DFE path for RF communication operation may already be enabled, but this mode may be for detecting in-channel interference.

Illustratively, the processor 1040 may reconfigure the RX digital filter complexity to reduce ACS without impairing overall RF blocking performance (as the RF ES operation may indicate that there are no nearby interferers). Additionally, or alternatively, the processor 1040 may simplify DL DPD configuration since stringent ACLR and close-in emissions specs may not be needed if the RF ES operation indicates that there are no other adjacent channels in use. Additionally, or alternatively, if RF communication operations are configured to use various component carriers (CCs) to satisfy peak traffic, the processor 1040 may cause disabling use of certain CCs when traffic abates, optionally based on the time (e.g. at night), such that the remaining CCs in use may be configured to span far from other operators' CCs, based on the RF ES operation.

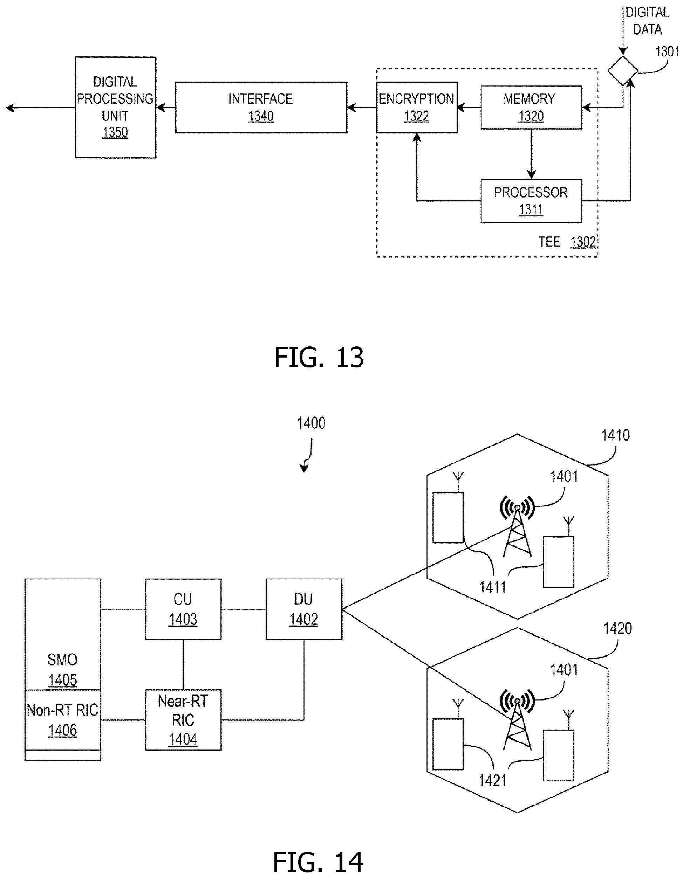

FIG. 13 shows an exemplary illustration of a block diagram in accordance with various aspects described herein. A processor (e.g. the processor 1040, the processor 911, the processor 611, the processor 411) described in this disclosure may be configured to cause the digital signal converted from the RF signal of the respective RX path determined for RF ES operation to be processed and/or stored in a trusted execution environment (TEE) 1302. A TEE 1302 may refer to that code and data (e.g. the digital data or any processed output of the digital data) loaded inside the TEE 1302 is protected from access by code executing outside of the TEE. Accordingly, the TEE 1302 may provide an isolated execution environment that prevents, at the hardware level, access of the data and code contained in the TEE 1302. It is to be noted that there are various methods used to obtain the TEE 1302. Commonly, a TEE may be provided via executing code within a portion of memory protected from access by processes outside of the TEE 1302. Example TEEs 132 may include enclaves created by Intel® Software Guard Extensions (SGX) and trust domains created by Intel® Trust Domain Extensions (TDX).

It is to be noted that the depicted example in FIG. 13 may be applied to any one of RX paths described herein. Illustratively, a signal routing component 1301 (e.g. a switch device) may cause digital data converted from a received RF signal of an RX path within the TEE 1302 to be stored in a memory 1320 of the TEE. Exemplarily, the memory 1320 may include secure enclaves to store received digital data.

There are various examples provided herein in which either the processor 1311 performs the processing of the stored digital data to determine one or more spectral contents within the frequency band, or another entity, which may be a digital processing unit (e.g. the digital processing unit 450, the digital processing unit 950) or another entity external to the radio communication device including the digital processing unit or the processor 1311, performs the processing of the stored digital data to determine one or more spectral contents with the frequency band.

In some aspects, in which the processor 1311 performs spectral analysis at least partially, the processor 1311 may perform its operations for spectral analysis of the stored digital data within the TEE 1302 and store data associated with its operations within the memory 1320. In some examples, the processor 1311 may generate spectral reports representative of identified spectral components based on the spectral analysis to be stored in the memory 1320 within the TEE 1302. In this example, the data to be sent to the digital processing unit 1350 may include generated spectral reports, which are to be referred to as RF ES-related data. In some aspects, in which the processor 1311 may cause the stored digital signal to be sent to the digital processing unit 1350, The RF ES-related data may include the stored digital signal itself or a variation of the stored digital signal (e.g. subsampled digital data, down-sampled digital data, compressed digital data, encrypted digital data, etc.). The processor 1311 may cause the RF ES-related data to be sent to the digital processing unit via a packet based communication interface (e.g. PCIe).

In some examples, the processor 1311 may send the RF ES-related data to the digital processing unit 1311 using encrypted links. For this purpose, an encryption block 1322 (e.g. an encryption algorithm executed by the processor 1311) may encrypt the RF ES-related data to be sent to the digital processing unit 1350 via the interface 1340. The processor 1311 may further perform encoding of the encrypted RF ES-related data to be sent via the interface 1340 to the digital processing unit.

Any conventional methods may be used for encryption of the RF ES-related data. Illustratively, the encryption block 1322 may encrypt the RF ES-related data via private-public key pairs. In case the actual entity that is going to use the RF ES-related data is the digital processing unit 1350, the processor 1311 may use the encryption key of the digital processing unit 1350. However, in cases in which the actual entity that is to use the RF ES-related data is not the digital processing unit 1350, the processor 1311 may use the encryption key of the actual entity. Illustratively, when RRH intends to provide RF ES-related data to another upper layer entity within the network, such as a CU, a DU, or any other entity with the architecture, through encryption using the encryption key of the actual entity, even the digital processing unit 1350 may not access to the RF ES-related data. It is further to be noted that the processor 1311 may encrypt RF ES-related data of different RX paths using different encryption keys, Illustratively, the processor 1311 may encrypt RF ES-related data of a first RX path via a first encryption key (e.g. encryption key of the digital processing unit 1350) and the processor 1311 may encrypt RF ES-related data of a second RX path via a second encryption key (e.g. encryption key of a CU). Accordingly, each stream may be tailored to a specific user of the RF ES-related data, only accessible by that user and may contain a subset of data as needed as well.

In accordance with various aspects provided herein, the aspects described in accordance with FIG. 13 may be used only for certain RX paths configured for secure operation. A processor (e.g. the processor 1311 or the digital processing unit 1350) may configure only a selection of the RX paths configured for RF ES operation for secure operation. In particular, it is to be noted that for detection of certain classified waveforms such as the C-band Navy radar signals, a specific authorization may be required which the specific authorization may be indicated illustratively by the digital processing unit 1350 or the processor 1311 itself that are specific to certain RX paths, and only when an RX path is configured specifically for secure operation, processing and storing of digital data may be performed within the TEE 1302. Configuration of the secure operation may include number of streams, encryption to be used, etc.

As indicated in this disclosure, the determination of one or more spectral contents based on received RF signals may be used for various operations requiring a representation of the corresponding frequency band. Information representative of determined one or more spectral contents are referred to as spectral reports in this disclosure. Illustratively, the processor 1311 or the digital processing unit 1350 may determine one or more sources of unwanted or unexpected interference based on the spectral reports. In some examples, the processor 1311 or the digital processing unit 1350 may determine presence of military or aviation radars and modify channel allocation for RF communication operations accordingly. In some examples, the processor 1311 or the digital processing unit 1350 may monitor RF traffic of other operators or base stations based on the spectral reports. In a larger application, an entity (e.g. a DU or a CU) may obtain spectral reports of multiple RUs and may generate an RF traffic profile in accordance with location of each RU of the multiple RUs.

In accordance with various aspects, in which RF ES-related data including the digital data, a processor (e.g. the processor 1311, the processor 1040, the processor 911, the processor 611, the processor 411) may send the RF ES-related data in a format that is time-stamped. The table below is an example data structure for sending the digital data to a corresponding digital processing unit, noting that this flexible format may the RF band, antenna port number, and starting symbol # (expressed in 3GPP network time units) to be specified, along with the ADC sample rate, resolution and may allow to include the actual samples at the end of the record.

| Field | Data type | Example data or range | Definition |
|---|---|---|---|
| RF Band | String | n78 | |
| Antenna port | 7-bit unsigned binary | 1-64 | |
| Frame number | 48-bit un-signed inte-ger | | Frame *if* in which data capture started, aka BFN; 1 frame = 10 msec. Large bit field allows for Hyper Frame number (HFN) to also be included |
| Sub-frame *if* | 4-bit un-signed inte-ger | 1-10 | Denoted as SFN; 1 sub-frame = 1 msec |
| Slot# | 4-bit un-signed inte-ger | 1-16 | Range depends on sub-carrier spacing |
| Symbol # | 4-bit un-signed inte-ger | 1-14 | Starting symbol in Frame number, Sub-frame #, and Slot if indicated by fields above |
| RX-ADC Sample rate | 32-bit unsigned fixed point | 1-32 GBPS | ADC Fs in GSPS |
| Num_samples (N) | 32-bit un-signed inte-ger | 100K to several million is feasible | # samples per record |
| Sample_resolution | 5-bit un-signed inte-ger | 10-16 bits | Raw ADC sample resolution (# of bits)....not eNOB |

| Sample 1 | 32-bit 2s complement | | LSB-justified format....unused bits in 32 bit work set to 0 |
|---|---|---|---|
| Sample 2 | ... | ... | |
| ... | ... | ... | ... |
| Sample N | 32-bit 2s complement | | |
| End_of_rec ord_indicator | 32-bit binary | | ASCII EOF code could be used |

It should be evident that the table provided above is solely illustrative and other RF ADC data formats may be used in accordance with the aspects described herein. For example, the RF samples could be in a 1s complement rather than 2s complement.

FIG. 14 shows an exemplary radio access network architecture in which the radio access network is disaggregated into multiple units. In LTE or 5GNR, network access nodes (e.g. network access nodes 110 and 120), such as a BS may implement the whole network stack including physical layer (PHY), media access control (MAC), radio link control (RLC), packet data convergence control (PDCP), and radio resource control (RRC) functions of the network stack. In a distributed approach of radio access networks, the processing of the network stack is disaggregated into at least two units (e.g. into radio unit (RU), distributed unit (DU), and central unit (CU)). Although the example illustrates a distributed structure that is based on open-RAN (O-RAN) architecture, the skilled person is able to populate the teaching provided herein in other types of distributed architectures, such as baseband unit (BBU) that may operate in the cloud and may be split to a Control Unit (CU) according to Rel.15 of 3GPP standards.

In various deployments in recently emerged RAN architectures, such as Open Radio Access Network (O-RAN) architectures, network access nodes may have functionalities that are split among multiple units with an intention to meet the demands of increased capacity requirements by providing a flexible and interoperable approach for RANs. The exemplary RAN 1400 provided herein includes a radio unit (RU) 1401, a DU 1402, a CU 1403, a near RT-RIC 1404, and a service management and orchestration framework (SMO) 1405 including a non-RT RIC 1406. The skilled person would recognize that the illustrated structure may represent a logical architecture, in which one or more of the entities of the mobile communication network may be implemented by the same physical entity, or a distributed physical entity (a plurality of devices operating collectively) may implement one of the entities of the mobile communication network provided herein.

There are many approaches to provide the split among the multiple units. In this illustrative example, the CU 1403 (e.g. O-CU) may be mainly responsible for non-real time operations hosting the radio resource control (RRC), the PDCP protocol, and the service data adaptation protocol (SDAP). The DU (e.g. O-DU) 1402 may be mainly responsible for real-time operations hosting, for example, RLC layer functions, MAC layer functions, and Higher-PHY functions. RUs 1401 (e.g. O-RU) may be mainly responsible for hosting the Lower-PHY functions to transmit and receive radio communication signals to/from terminal devices (e.g. UEs) and provide data streams to the DU over a fronthaul interface (e.g. open fronthaul). The SMO 1405 may provide functions to manage domains such as RAN management, Core management, Transport management, and the non-RT RIC 1406 may provide functions to support intelligent RAN optimization via policy-based guidance, AI/ML model management, etc. The near-RT RIC 1404 may provide functions for real time optimizations, including hosting one or more xApps that may collect real-time information (per UE or per Cell) and provide services, that may include AI/ML services as well.

The exemplary RAN 1400 is illustrated for the purpose of brevity. The skilled person would recognize the aspects provided herein and may also realize that the exemplary RAN 1400 may include further characterizations, such as the CU may also be -at least logically- distributed into two entities (e.g. CU-Control Plane, CU-User Plane), there may be various types of interfaces between different entities of the exemplary RAN 1400 (e.g. E2, F1, O1, X2, NG-u, etc.). RAN 1400 may include more than one RUs connected within the architecture to a common entities performing upper layers of the protocol stack, as exemplarily illustrated herein two RUs 1401, providing network access services for respective cells 1410, 1420 to respective UEs 1411, 1421.

In accordance with the exemplary distributed RAN architecture, a UE may transmit radio communication signals to the RU 1401 and receive radio communication signals from the RU 1401. The processing associated with the communication is performed at the respective layers of the network stack by respective entities that are responsible to perform the corresponding function of the respective layers.

In accordance with various aspects of this disclosure, the RU 1401 may include a radio communication device (e.g. the RRH 400) described within this disclosure to communicate with UEs attached to the RU 1401. The RU 1401 may selectively use one or more RX paths of available RX paths for uplink communication and other one or more RX paths of available RX paths for RF ES operations. The RU 1401 may generate one or more spectral reports based on performed RF ES operations, which the RU 1401 may use to schedule RF operations both in uplink and/or in downlink direction. The RU 1401 may send RF ES-related data to the DU 1402, to the CU 1403, to the near RT-RIC 1404, to the non-RT RIC 1406 and/or to the SMO 1405, so that those entities may analysis RF-ES related data to determine spectral contents and configure various network parameters accordingly.

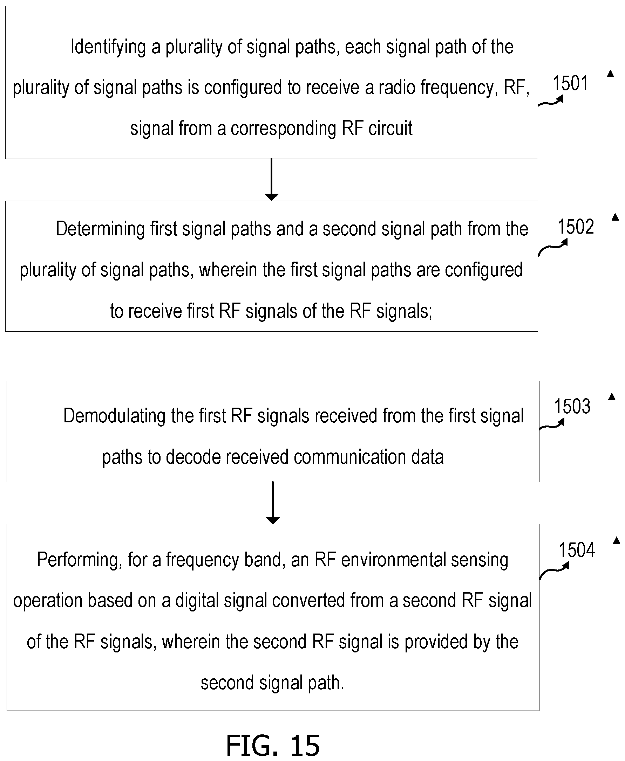

FIG. 15 shows an example of a method. The method may include: identifying 1501 a plurality of signal paths, each signal path of the plurality of signal paths is configured to receive a radio frequency, RF, signal from a corresponding RF circuit; determining 1502 first signal paths and a second signal path from the plurality of signal paths, wherein the first signal paths are configured to receive first RF signals of the RF signals; demodulating 1503 the first RF signals received from the first signal paths to decode received communication data; and performing 1504, for a frequency band, an RF environmental sensing operation based on a digital signal converted from a second RF signal of the RF signals, wherein the second RF signal is provided by the second signal path. Exemplarily, a non-transitory computer-readable medium may include instructions which, if executed by a processor, cause the processor to perform the method.

The following examples pertain to further aspects of this disclosure.

In example 1, the subject matter includes an apparatus of a radio communication device, the apparatus including: a plurality of signal paths, each signal path of the plurality of signal paths is configured to receive a radio frequency, RF, signal from a corresponding RF circuit; a processor configured to: determine first signal paths and a second signal path from the plurality of signal paths, wherein the first signal paths are configured to receive first RF signals of the RF signals; demodulate the first RF signals received from the first signal paths to decode received communication data; perform, for a frequency band, an RF environmental sensing operation based on a digital signal converted from a second RF signal of the RF signals, wherein the second RF signal is provided by the second signal path.

In example 2, the subject matter of example 1, wherein the processor is further configured to determine a spectral content of a frequency band based on the digital signal.

In example 3, the subject matter of example 1 or example 2, wherein the first and second RF signals are derived from the same RX antenna.

In example 4, the subject matter of any one of examples 1 to 3, wherein each signal path is capable to demodulate a received digital signal and to perform an RF environmental sensing operation based on the received digital signal.

In example 5, the subject matter of any one of examples 1 to 4, wherein the processor is further configured to selectively perform the RF environmental sensing operation with or demodulate the respective RF signal received from each signal path of the plurality of signal paths.

In example 6, the subject matter of any one of examples 1 to 5, wherein the processor is further configured to route the digital signal for a transmission to a digital processing unit via a data converter serial interface; and wherein the data converter serial interface is further configured to send communication data obtained based on the demodulated first RF signals.

In example 7, the subject matter of any one of examples 1 to 6, may further include a memory configured to store the digital signal.

In example 8, the subject matter of example 7, wherein the processor is further configured to route the stored digital signal for a transmission to a digital processing unit via a packet-based communication interface.

In example 9, the subject matter of example 7 or example 8, wherein the processor is further configured to determine information representative of a spectral content within the frequency band based on an analysis of the stored digital signal; wherein the processor is further configured to send the determined information via a packet-based communication interface.

In example 10, the subject matter of any one of examples 1 to 9, wherein the processor is configured to determine the first signal paths and the second signal path based on scheduled radio communication operations associated with the RF circuits.

In example 11, the subject matter of example 10, wherein the processor is configured to select one of the plurality of signal paths as the second signal path, if the respective RF circuit of the second signal path is not scheduled for a radio communication.

In example 12, the subject matter of example 10 or example 11, wherein the processor is further configured to schedule the one of the plurality of signal paths to be used as the second signal path for a period of time based on the respective scheduled radio communication operations associated with the respective RF circuit, such that there is no scheduled radio communication operation within the period of time.

In example 13, the subject matter of any one of examples 10 to 12, wherein the processor is configured to perform the RF environmental sensing operation during scheduled blank LTE or NR symbols for the second signal path.

In example 14, the subject matter of any one of examples 1 to 13, wherein the digital signal includes a down-sampled signal converted from the second RF signal.

In example 15, the subject matter of any one of examples 1 to 14, wherein the digital signal includes unfiltered in-phase and quadrature (I/Q) samples.

In example 16, the subject matter of any one of examples 1 to 15, wherein the digital signal includes unfiltered real RF samples.

In example 17, the subject matter of any one of examples 1 to 16, wherein the digital signal includes a baseband signal.

In example 18, the subject matter of any one of examples 1 to 17, wherein the processor is further configured to process the digital signal for the RF environmental sensing operation in a trusted execution environment.

In example 19, the subject matter of example 18, wherein the digital signal and/or data obtained by processing the digital signal is stored in a secure enclave.

In example 20, the subject matter of any one of examples 1 to 19, wherein the processor is further configured to communicate the digital signal or data obtained based on the digital signal using encrypted links.

In example 21, the subject matter of example 20, wherein the processor is further configured to establish multiple encryption links to communicate multiple digital signals or multiple data obtained based on the multiple digital signals.

In example 22, the subject matter of any one of examples 1 to 21, may further include the plurality of RF circuits, each RF circuit is configured to transmit and/or receive radio communication signals within a corresponding frequency band; wherein the performed RF environmental sensing operation is for the frequency band of the respective RF circuit coupled to the second signal path.

In example 23, the subject matter of any one of examples 1 to 22, wherein the processor is configured to adjust RF communication parameters to scale back adjacent channel selectivity (ACS) or adjacent channel leakage ration (ACLR) operations, in case determined one or more spectral contents indicate a reduced adjacent channel activity.

In example 24, a remote radio unit may include: an antenna array; a fronthaul interface; the subject matter of any one of examples 1 to 23, a plurality of RF circuits, each RF circuit including a respective analog to digital converter configured to convert the respective RF signal received by the RF circuit; wherein the processor is further configured to control each RF circuit of the plurality of RF circuits.

In example 25, the remote radio unit of example 24, wherein the fronthaul interface is configured to provide a communication between the remote radio unit and an external communication device that is external to the remote radio unit; wherein the processor is further configured to implement a first portion of a radio communication protocol stack and send communication data to the external communication data, wherein the communication data is obtained by implementing the first portion of the radio communication protocol stack to the first RF signals.

In example 26, the remote radio unit of example 24 or example 25, wherein the processor is further configured to encode at least one of the digital signal or data obtained based on the digital signal for a transmission over the fronthaul interface.

In example 27, the remote radio unit of any one of examples 24 to 26, wherein the remote radio unit is a Radio Unit (O-RU) of an Open Radio Access Network (O-RAN) architecture; wherein the external communication device including a Distributed Unit (O-DU) and/or a Centralized Unit (O-CU).

In example 28, the subject matter include an apparatus of a radio communication device, the apparatus including: a plurality of signal paths configured to receive radio frequency, RF, signals from a plurality of RF circuits; a processor configured to: select at least one signal path of the plurality of signal paths for an RF environmental sensing operation; perform the RF environmental sensing operation with a respective RF signal provided by the selected at least one signal path of the plurality of signal paths; perform an RF radio communication operation with respective RF signals of other signal paths of the plurality of signal paths, wherein the other signal paths are distinct from the selected at least one signal path.

In example 29, the subject matter of example 28, wherein the subject matter is further configured in accordance with any aspects described herein, particularly aspects described in examples 2 to example 27.

In example 30, the subject matter includes a method including: identifying a plurality of signal paths, each signal path of the plurality of signal paths is configured to receive a radio frequency, RF, signal from a corresponding RF circuit; determining first signal paths and a second signal path from the plurality of signal paths, wherein the first signal paths are configured to receive first RF signals of the RF signals; demodulating the first RF signals received from the first signal paths to decode received communication data; performing, for a frequency band, an RF environmental sensing operation based on a digital signal converted from a second RF signal of the RF signals, wherein the second RF signal is provided by the second signal path.

In example 31, the subject matter of example 30, may further include determining a spectral content of a frequency band based on the digital signal.

In example 32, the subject matter of example 30 or example 31, wherein the first and second RF signals are derived from the same RX antenna.

In example 33, the subject matter of any one of examples 30 to 32, wherein each signal path is capable to demodulate a received digital signal and to perform an RF environmental sensing operation based on the received digital signal.

In example 34, the subject matter of any one of examples 30 to 33, may further include selectively performing the RF environmental sensing operation with or demodulate the respective RF signal received from each signal path of the plurality of signal paths.

In example 35, the subject matter of any one of examples 30 to 34, may further include: routing the digital signal for a transmission to a digital processing unit via a data converter serial interface; and sending, via the data converter serial interface, communication data obtained based on the demodulated first RF signals.

In example 36, the subject matter of any one of examples 30 to 35, may further include storing the digital signal.

In example 37, the subject matter of example 36, may further include routing the stored digital signal for a transmission to a digital processing unit via a packet-based communication interface.

In example 38, the subject matter of example 36 or example 36, may further include: determining information representative of a spectral content within the frequency band based on an analysis of the stored digital signal; sending the determined information via a packet-based communication interface.

In example 39, the subject matter of any one of examples 30 to 38, may further include determining the first signal paths and the second signal path based on scheduled radio communication operations associated with the RF circuits.

In example 40, the subject matter of example 39, may further include selecting one of the plurality of signal paths as the second signal path, if the respective RF circuit of the second signal path is not scheduled for a radio communication.

In example 41, the subject matter of example 39 or example 40, may further include scheduling the one of the plurality of signal paths to be used as the second signal path for a period of time based on the respective scheduled radio communication operations associated with the respective RF circuit, such that there is no scheduled radio communication operation within the period of time.

In example 42, the subject matter of any one of examples 39 to 41, may further include performing the RF environmental sensing operation during scheduled blank LTE or NR symbols for the second signal path.

In example 43, the subject matter of any one of examples 30 to 42, wherein the digital signal includes a down-sampled signal converted from the second RF signal.

In example 44, the subject matter of any one of examples 30 to 43, wherein the digital signal includes unfiltered in-phase and quadrature (I/Q) samples.

In example 45, the subject matter of any one of examples 30 to 44, wherein the digital signal includes unfiltered real RF samples.

In example 46, the subject matter of any one of examples 30 to 45, wherein the digital signal includes a baseband signal.

In example 47, the subject matter of any one of examples 30 to 46, may further include processing the digital signal for the RF environmental sensing operation in a trusted execution environment.

In example 48, the subject matter of example 47, wherein the digital signal and/or data obtained by processing the digital signal is stored in a secure enclave.

In example 49, the subject matter of any one of examples 30 to 48, may further include communicating the digital signal or data obtained based on the digital signal using encrypted links.

In example 50, the subject matter of example 49, may further include establishing multiple encryption links to communicate multiple digital signals or multiple data obtained based on the multiple digital signals.

In example 51, the subject matter of any one of examples 30 to 50, may further include transmitting and/or receiving, via the plurality of RF circuits, radio communication signals within a corresponding frequency band; wherein the performed RF environmental sensing operation is for the frequency band of the respective RF circuit coupled to the second signal path.

In example 52, the subject matter of any one of examples 30 to 51, may further include adjusting RF communication parameters to scale back adjacent channel selectivity (ACS) or adjacent channel leakage ration (ACLR) operations, in case determined one or more spectral contents indicate a reduced adjacent channel activity.

In example 53, the subject matter of any one of examples 30 to 52, may further include providing, via a fronthaul interface, a communication between the remote radio unit and an external communication device that is external to the remote radio unit; and implementing a first portion of a radio communication protocol stack and send communication data to the external communication data, wherein the communication data is obtained by implementing the first portion of the radio communication protocol stack to the first RF signals.

In example 54, the subject matter of example 53, may further include encoding at least one of the digital signal or data obtained based on the digital signal for a transmission over the fronthaul interface.

In example 55, the subject matter may include a method including: determining a plurality of signal paths configured to receive radio frequency, RF, signals from a plurality of RF circuits; selecting at least one signal path of the plurality of signal paths for an RF environmental sensing operation; performing the RF environmental sensing operation with a respective RF signal provided by the selected at least one signal path of the plurality of signal paths; performing an RF radio communication operation with respective RF signals of other signal paths of the plurality of signal paths, wherein the other signal paths are distinct from the selected at least one signal path.

In example 56, the subject matter of example 55, wherein the method further includes any aspects described herein, particularly aspects described in examples 30 to 54.

In example 57, a non-transitory computer-readable medium including one or more instructions which, if executed by a processor, cause the processor to: identify a plurality of signal paths, each signal path of the plurality of signal paths is configured to receive a radio frequency, RF, signal from a corresponding RF circuit; determine first signal paths and a second signal path from the plurality of signal paths, wherein the first signal paths are configured to receive first RF signals of the RF signals; demodulate the first RF signals received from the first signal paths to decode received communication data; perform, for a frequency band, an RF environmental sensing operation based on a digital signal converted from a second RF signal of the RF signals, wherein the second RF signal is provided by the second signal path.

In example 58, the subject matter of example 57, wherein the one or more instructions further cause the processor to determine a spectral content of a frequency band based on the digital signal.

In example 59, the subject matter of example 57 or example 58, wherein the first and second RF signals are derived from the same RX antenna.

In example 60, the subject matter of any one of examples 57 to 59, wherein each signal path is capable to demodulate a received digital signal and to perform an RF environmental sensing operation based on the received digital signal.

In example 61, the subject matter of any one of examples 57 to 60, wherein the one or more instructions further cause the processor to selectively perform the RF environmental sensing operation with or demodulate the respective RF signal received from each signal path of the plurality of signal paths.

In example 62, the subject matter of any one of examples 57 to 61, wherein the one or more instructions further cause the processor to route the digital signal for a transmission to a digital processing unit via a data converter serial interface; and wherein the data converter serial interface is further configured to send communication data obtained based on the demodulated first RF signals.

In example 63, the subject matter of any one of examples 57 to 62, wherein the one or more instructions further cause the processor to store the digital signal in a memory.

In example 64, the subject matter of example 63, wherein the one or more instructions further cause the processor to route the stored digital signal for a transmission to a digital processing unit via a packet-based communication interface.

In example 65, the subject matter of example 63 or example 64, wherein the one or more instructions further cause the processor to determine information representative of a spectral content within the frequency band based on an analysis of the stored digital signal; wherein the one or more instructions further cause the processor to send the determined information via a packet-based communication interface.

In example 66, the subject matter of any one of examples 57 to 65, wherein the one or more instructions further cause the processor to determine the first signal paths and the second signal path based on scheduled radio communication operations associated with the RF circuits.

In example 67, the subject matter of example 66, wherein the one or more instructions further cause the processor to select one of the plurality of signal paths as the second signal path, if the respective RF circuit of the second signal path is not scheduled for a radio communication.

In example 68, the subject matter of example 66 or example 67, wherein the one or more instructions further cause the processor to schedule the one of the plurality of signal paths to be used as the second signal path for a period of time based on the respective scheduled radio communication operations associated with the respective RF circuit, such that there is no scheduled radio communication operation within the period of time.

In example 69, the subject matter of any one of examples 66 to 68, wherein the one or more instructions further cause the processor to perform the RF environmental sensing operation during scheduled blank LTE or NR symbols for the second signal path.

In example 70, the subject matter of any one of examples 57 to 69, wherein the digital signal includes a down-sampled signal converted from the second RF signal.

In example 71, the subject matter of any one of examples 57 to 70, wherein the digital signal includes unfiltered in-phase and quadrature (I/Q) samples.

In example 72, the subject matter of any one of examples 57 to 71, wherein the digital signal includes unfiltered real RF samples.

In example 73, the subject matter of any one of examples 57 to 72, wherein the digital signal includes a baseband signal.

In example 74, the subject matter of any one of examples 57 to 73, wherein the one or more instructions further cause the processor to process the digital signal for the RF environmental sensing operation in a trusted execution environment.

In example 75, the subject matter of example 74, wherein the digital signal and/or data obtained by processing the digital signal is stored in a secure enclave.

In example 76, the subject matter of any one of examples 57 to 75, wherein the one or more instructions further cause the processor to communicate the digital signal or data obtained based on the digital signal using encrypted links.

In example 77, the subject matter of example 76, wherein the one or more instructions further cause the processor to establish multiple encryption links to communicate multiple digital signals or multiple data obtained based on the multiple digital signals.

In example 78, the subject matter of any one of examples 57 to 77, wherein the performed RF environmental sensing operation is for the frequency band of the respective RF circuit coupled to the second signal path.

In example 79, the subject matter of any one of examples 57 to 78, wherein the one or more instructions further cause the processor to adjust RF communication parameters to scale back adjacent channel selectivity (ACS) or adjacent channel leakage ration (ACLR) operations, in case determined one or more spectral contents indicate a reduced adjacent channel activity.

In example 80, the subject matter of any one of examples 57 to 79,: wherein the one or more instructions further cause the processor to communicate via a fronthaul interface.

In example 81, the subject matter of example 80, wherein the fronthaul interface is configured to provide a communication between the remote radio unit and an external communication device that is external to the remote radio unit; wherein the one or more instructions further cause the processor to implement a first portion of a radio communication protocol stack and send communication data to the external communication data, wherein the communication data is obtained by implementing the first portion of the radio communication protocol stack to the first RF signals.

In example 82, the non-transitory computer-readable medium of example 80 or example 81, wherein the one or more instructions further cause the processor to encode at least one of the digital signal or data obtained based on the digital signal for a transmission over the fronthaul interface.

In example 83, a non-transitory computer-readable medium including one or more instructions which, if executed by a processor, cause the processor to: determine a plurality of signal paths configured to receive radio frequency, RF, signals from a plurality of RF circuits; select at least one signal path of the plurality of signal paths for an RF environmental sensing operation; perform the RF environmental sensing operation with a respective RF signal provided by the selected at least one signal path of the plurality of signal paths; perform an RF radio communication operation with respective RF signals of other signal paths of the plurality of signal paths, wherein the other signal paths are distinct from the selected at least one signal path.

In example 84, the subject matter of example 83, wherein the non-transitory computer-readable medium further includes any aspects described herein, particularly aspects described in examples 57 to 82.

The word "exemplary" is used herein to mean "serving as an example, instance, or illustration". Any embodiment or design described herein as "exemplary" is not necessarily to be construed as preferred or advantageous over other embodiments or designs.

The words "plurality" and "multiple" in the description or the claims expressly refer to a quantity greater than one. The terms "group (of)", "set [of]", "collection (of)", "series (of)", "sequence (of)", "grouping (of)", etc., and the like in the description or in the claims refer to a quantity equal to or greater than one, i.e. one or more. Any term expressed in plural form that does not expressly state "plurality" or "multiple" likewise refers to a quantity equal to or greater than one.

Any vector and/or matrix notation utilized herein is exemplary in nature and is employed solely for purposes of explanation. Accordingly, the apparatuses and methods of this disclosure accompanied by vector and/or matrix notation are not limited to being implemented solely using vectors and/or matrices, and that the associated processes and computations may be equivalently performed with respect to sets, sequences, groups, etc., of data, observations, information, signals, samples, symbols, elements, etc.

As used herein, "memory" is understood as a non-transitory computer-readable medium in which data or information can be stored for retrieval. References to "memory" included herein may thus be understood as referring to volatile or non-volatile memory, including random access memory ("RAM"), read-only memory ("ROM"), flash memory, solid-state storage, magnetic tape, hard disk drive, optical drive, etc., or any combination thereof. Furthermore, registers, shift registers, processor registers, data buffers, etc., are also embraced herein by the term memory. A single component referred to as "memory" or "a memory" may be composed of more than one different type of memory, and thus may refer to a collective component including one or more types of memory. Any single memory component may be separated into multiple collectively equivalent memory components, and vice versa. Furthermore, while memory may be depicted as separate from one or more other components (such as in the drawings), memory may also be integrated with other components, such as on a common integrated chip or a controller with an embedded memory.

The term "software" refers to any type of executable instruction, including firmware.

In the context of this disclosure, the term "process" may be used, for example, to indicate a method. Illustratively, any process described herein may be implemented as a method (e.g., a channel estimation process may be understood as a channel estimation method). Any process described herein may be implemented as a non-transitory computer readable medium including instructions configured, when executed, to cause one or more processors to carry out the process (e.g., to carry out the method).

Throughout the drawings, it should be noted that like reference numbers are used to depict the same or similar elements, features, and structures, unless otherwise noted. It should be noted that certain components may be omitted for the sake of simplicity. It should be noted that nodes (dots) are provided to identify the circuit line intersections in the drawings including electronic circuit diagrams.

The phrase "at least one" and "one or more" may be understood to include a numerical quantity greater than or equal to one (e.g., one, two, three, four, [...], etc.). The phrase "at least one of" with regard to a group of elements may be used herein to mean at least one element from the group consisting of the elements. For example, the phrase "at least one of" with regard to a group of elements may be used herein to mean a selection of: one of the listed elements, a plurality of one of the listed elements, a plurality of individual listed elements, or a plurality of a multiple of individual listed elements.

The words "plural" and "multiple" in the description and in the claims expressly refer to a quantity greater than one. Accordingly, any phrases explicitly invoking the aforementioned words (e.g., "plural [elements]", "multiple [elements]") referring to a quantity of elements expressly refers to more than one of the said elements. For instance, the phrase "a plurality" may be understood to include a numerical quantity greater than or equal to two (e.g., two, three, four, five, [...], etc.).

As used herein, a signal or information that is "indicative of", "representative", "representing", or "indicating" a value or other information may be a digital or analog signal that encodes or otherwise, communicates the value or other information in a manner that can be decoded by and/or cause a responsive action in a component receiving the signal. The signal may be stored or buffered in computer-readable storage medium prior to its receipt by the receiving component and the receiving component may retrieve the signal from the storage medium. Further, a "value" that is "indicative of" or "representative" some quantity, state, or parameter may be physically embodied as a digital signal, an analog signal, or stored bits that encode or otherwise communicate the value.

As used herein, a signal may be transmitted or conducted through a signal chain in which the signal is processed to change characteristics such as phase, amplitude, frequency, and so on. The signal may be referred to as the same signal even as such characteristics are adapted. In general, so long as a signal continues to encode the same information, the signal may be considered as the same signal. For example, a transmit signal may be considered as referring to the transmit signal in baseband, intermediate, and radio frequencies.

The terms "processor" or "controller" as, for example, used herein may be understood as any kind of technological entity that allows handling of data. The data may be handled according to one or more specific functions executed by the processor. Further, a processor or controller as used herein may be understood as any kind of circuit, e.g., any kind of analog or digital circuit. A processor or a controller may thus be or include an analog circuit, digital circuit, mixed-signal circuit, logic circuit, processor, microprocessor, Central Processing Unit (CPU), Graphics Processing Unit (GPU), Digital Signal Processor (DSP), Field Programmable Gate Array (FPGA), integrated circuit, Application Specific Integrated Circuit (ASIC), etc., or any combination thereof. Any other kind of implementation of the respective functions, which will be described below in further detail, may also be understood as a processor, controller, or logic circuit. It is understood that any two (or more) of the processors, controllers, or logic circuits detailed herein may be realized as a single entity with equivalent functionality or the like, and conversely that any single processor, controller, or logic circuit detailed herein may be realized as two (or more) separate entities with equivalent functionality or the like.

The terms "one or more processors" is intended to refer to a processor or a controller. The one or more processors may include one processor or a plurality of processors. The terms are simply used as an alternative to the "processor" or "controller".

The term "user device" is intended to refer to a device of a user (e.g. occupant) that may be configured to provide information related to the user. The user device may exemplarily include a mobile phone, a smart phone, a wearable device (e.g. smart watch, smart wristband), a computer, etc.

As utilized herein, terms "module", "component," "system," "circuit," "element," "slice," " circuit," and the like are intended to refer to a set of one or more electronic components, a computer-related entity, hardware, software (e.g., in execution), and/or firmware. For example, circuit or a similar term can be a processor, a process running on a processor, a controller, an object, an executable program, a storage device, and/or a computer with a processing device. By way of illustration, an application running on a server and the server can also be circuit. One or more circuits can reside within the same circuit, and circuit can be localized on one computer and/or distributed between two or more computers. A set of elements or a set of other circuits can be described herein, in which the term "set" can be interpreted as "one or more".

The terminology in accordance with open-RAN (O-RAN) specifications is to be considered for Radio Units (RUs), Distributed Units (DUs) and Centralized Units (CUs). Inherently, a base station is considered to be disaggregated into such units in accordance with layers of a corresponding protocol stack into these logical nodes, which all of them can be implemented by the same device or multiple devices in which each device may be deployed with one of these units.

The term "data" as used herein may be understood to include information in any suitable analog or digital form, e.g., provided as a file, a portion of a file, a set of files, a signal or stream, a portion of a signal or stream, a set of signals or streams, and the like. Further, the term "data" may also be used to mean a reference to information, e.g., in form of a pointer. The term "data", however, is not limited to the aforementioned examples and may take various forms and represent any information as understood in the art. The term "data item" may include data or a portion of data.

The term "demodulation" or "demodulate" as used herein may be understood to extract information-bearing signal sent by a transmitter/modulator from a carrier wave, or in other words recovering information from an RF signal including a modulated carrier wave. Illustratively, demodulation may include down conversion, and extracting baseband signals from down converted signals.

It will be understood that when an element is referred to as being "connected" or "coupled" to another element, it can be physically connected or coupled to the other element such that current and/or electromagnetic radiation (e.g., a signal) can flow along a conductive path formed by the elements. Inherently, such element is connectable or couplable to the another element. Intervening conductive, inductive, or capacitive elements may be present between the element and the other element when the elements are described as being coupled or connected to one another. Further, when coupled or connected to one another, one element may be capable of inducing a voltage or current flow or propagation of an electromagnetic wave in the other element without physical contact or intervening components. Further, when a voltage, current, or signal is referred to as being "provided" to an element, the voltage, current, or signal may be conducted to the element by way of a physical connection or by way of capacitive, electro-magnetic, or inductive coupling that does not involve a physical connection.

Unless explicitly specified, the term "instance of time" refers to a time of a particular event or situation according to the context. The instance of time may refer to an instantaneous point in time, or to a period of time which the particular event or situation relates to.

Unless explicitly specified, the term "transmit" encompasses both direct (point-to-point) and indirect transmission (via one or more intermediary points). Similarly, the term "receive" encompasses both direct and indirect reception. Furthermore, the terms "transmit," "receive," "communicate," and other similar terms encompass both physical transmission (e.g., the transmission of radio signals) and logical transmission (e.g., the transmission of digital data over a logical software-level connection). For example, a processor or controller may transmit or receive data over a software-level connection with another processor or controller in the form of radio signals, where the physical transmission and reception is handled by radio-layer components such as RF transceivers and antennas, and the logical transmission and reception over the software-level connection is performed by the processors or controllers. The term "communicate" encompasses one or both of transmitting and receiving, i.e., unidirectional or bidirectional communication in one or both of the incoming and outgoing directions. The term "calculate" encompasses both 'direct' calculations via a mathematical expression/-formula/relationship and 'indirect' calculations via lookup or hash tables and other array indexing or searching operations.

An antenna port may be understood as a logical concept representing a specific channel or associated with a specific channel. An antenna port may be understood as a logical structure associated with a respective channel (e.g., a respective channel between a user equipment and a base station). Illustratively, symbols (e.g., OFDM symbols) transmitted over an antenna port (e.g., over a first channel) may be subject to different propagation conditions with respect to other symbols transmitted over another antenna port (e.g., over a second channel).

While the above descriptions and connected figures may depict electronic device components as separate elements, skilled persons will appreciate the various possibilities to combine or integrate discrete elements into a single element. Such may include combining two or more circuits to form a single circuit, mounting two or more circuits onto a common chip or chassis to form an integrated element, executing discrete software components on a common processor core, etc. Conversely, skilled persons will recognize the possibility to separate a single element into two or more discrete elements, such as splitting a single circuit into two or more separate circuits, separating a chip or chassis into discrete elements originally provided thereon, separating a software component into two or more sections and executing each on a separate processor core, etc.

It is appreciated that implementations of methods detailed herein are demonstrative in nature, and are thus understood as capable of being implemented in a corresponding device. Likewise, it is appreciated that implementations of devices detailed herein are understood as capable of being implemented as a corresponding method. It is thus understood that a device corresponding to a method detailed herein may include one or more components configured to perform each aspect of the related method. All acronyms defined in the above description additionally hold in all claims included herein.

## Claims

1. An apparatus of a radio communication device, the apparatus comprising:

    a plurality of signal paths, each signal path of the plurality of signal paths is configured to receive a radio frequency, RF, signal from a corresponding RF circuit;
    a processor configured to:

       determine first signal paths and a second signal path from the plurality of signal paths, wherein the first signal paths are configured to receive first RF signals of the RF signals;
       demodulate the first RF signals received from the first signal paths to decode received communication data;
       perform, for a frequency band, an RF environmental sensing operation based on a digital signal converted from a second RF signal of the RF signals, wherein the second RF signal is provided by the second signal path.

2. The apparatus of claim 1,
   wherein the processor is further configured to determine a spectral content of a frequency band based on the digital signal.

3. The apparatus of claim 1 or claim 2,
   wherein the first and second RF signals are derived from the same RX antenna.

4. The apparatus of any one of claims 1 to 3,
   wherein each signal path is capable to demodulate a received digital signal and to perform an RF environmental sensing operation based on the received digital signal.

5. The apparatus of any one of claims 1 to 4,
   wherein the processor is further configured to selectively perform the RF environmental sensing operation with or demodulate the respective RF signal received from each signal path of the plurality of signal paths.

6. The apparatus of any one of claims 1 to 5,

       wherein the processor is further configured to route the digital signal for a transmission to a digital processing unit via a data converter serial interface; and
       wherein the data converter serial interface is further configured to send communication data obtained based on the demodulated first RF signals.

7. The apparatus of any one of claims 1 to 5,
   wherein the processor is further configured to route stored digital signal for a transmission to a digital processing unit via a packet-based communication interface.

8. The apparatus of any one of claims 1 to 5,
wherein the processor is further configured to determine information representative of a spectral content within the frequency band based on an analysis of stored digital signal;
wherein the processor is further configured to send the determined information via a packet-based communication interface.

9. The apparatus of any one of claims 1 to 8,
wherein the processor is configured to determine the first signal paths and the second signal path based on scheduled radio communication operations associated with the RF circuits.

10. The apparatus of claim 9,
wherein the processor is further configured to schedule the one of the plurality of signal paths to be used as the second signal path for a period of time based on the respective scheduled radio communication operations associated with the respective RF circuit, such that there is no scheduled radio communication operation within the period of time.

11. The apparatus of any one of claims 1 to 10,
wherein the processor is further configured to process the digital signal for the RF environmental sensing operation in a trusted execution environment.

12. The apparatus of any one of claims 1 to 11,
wherein the processor is configured to adjust RF communication parameters to scale back adjacent channel selectivity (ACS) or adjacent channel leakage ration (ACLR) operations, in case determined one or more spectral contents indicate a reduced adjacent channel activity.

13. A remote radio unit comprising:

an antenna array;
a fronthaul interface;
the apparatus of any one of claims 1 to 12;
wherein the fronthaul interface is configured to provide a communication between the remote radio unit and an external communication device that is external to the remote radio unit;
wherein the processor is further configured to implement a first portion of a radio communication protocol stack and send communication data to the external communication data, wherein the communication data is obtained by implementing the first portion of the radio communication protocol stack to the first RF signals.

14. A non-transitory computer-readable medium comprising one or more instructions which, if executed by a processor, cause the processor to:

identify a plurality of signal paths, each signal path of the plurality of signal paths is configured to receive a radio frequency, RF, signal from a corresponding RF circuit;
determine first signal paths and a second signal path from the plurality of signal paths,
wherein the first signal paths are configured to receive first RF signals of the RF signals;
demodulate the first RF signals received from the first signal paths to decode received communication data;
perform, for a frequency band, an RF environmental sensing operation based on a digital signal converted from a second RF signal of the RF signals, wherein the second RF signal is provided by the second signal path.

15. The non-transitory computer-readable medium of claim 14,
wherein the one or more instructions further cause the processor to determine a spectral content of a frequency band based on the digital signal.

FIG. 1

FIG. 2

FIG. 3

FIG. 4

**FIG. 5**

**FIG. 6**

RF Pwr density
(dBm/MHz)

Other RX
signals

RU RX (UL)
user traffic

CC
#1

CC
#2

4400
MHz

4600
MHz

4900
MHz

5000
MHz

Freq

## FIG. 7A

RF Pwr density
(dBm/MHz)

Other RX
signals

RU RX (UL)
user traffic

CC
#2

CC
#1

1000
MHz

1100
MHz

1400
MHz

1600
MHz

3000
MHz
(Fs/2)

Freq

◀————————Aliased n79 spectrum————————▶

## FIG. 7B

FIG. 8

FIG. 9

FIG. 10

FIG. 11

Start ESC monitoring — 1201

Wide-band or in-channnel ESC mode? — 1202

Wideband

In-Channel

Retrieve TDD schedule for upcoming Slot — 1211

Retrieve TDD schedule for upcoming Slot — 1221

Wait until next TDD schedule available — 1213

Wait until next TDD schedule available — 1223

UL symbols in slot? — 1212

NO

Blank UL symbols in slot? — 1222

NO

YES

YES

Enable wide-band capture in ESC memory for all UL symbol durations — 1214

Enable in-channel capture in ESC memory for blank UL symbol durations — 1224

Analyze captured symbols for in-channel interference, adjacent channel activity, wide-band activity — 1215

Analyze captured symbols for in-channel interference — 1225

Add analysis results to interference data report — 1216

Add analysis results to interference data report — 1226

Periodically upload report — 1217

Periodically upload report — 1227

FIG. 12

**FIG. 13**

**FIG. 14**

Identifying a plurality of signal paths, each signal path of the plurality of signal paths is configured to receive a radio frequency, RF, signal from a corresponding RF circuit    1501

Determining first signal paths and a second signal path from the plurality of signal paths, wherein the first signal paths are configured to receive first RF signals of the RF signals;    1502

Demodulating the first RF signals received from the first signal paths to decode received communication data    1503

Performing, for a frequency band, an RF environmental sensing operation based on a digital signal converted from a second RF signal of the RF signals, wherein the second RF signal is provided by the second signal path.    1504

FIG. 15

Europäisches
Patentamt

European
Patent Office

Office européen
des brevets

# EUROPEAN SEARCH REPORT

**Application Number**

EP 23 20 0382

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 690 588 A2 (ROKE MANOR RESEARCH [GB]) 3 January 1996 (1996-01-03) * abstract; figures 1-4 * * column 1, line 16 - line 58 * * column 4, line 16 - column 5, line 34 * ----- | 1-8, 11-15 | INV. H04B1/16 H04B17/309 |
| X | US 2012/140793 A1 (DEMESSIE YOHANNES ALEMSEGED [JP] ET AL) 7 June 2012 (2012-06-07) * abstract; figures 1,3 * * paragraph [0001] - paragraph [0008] * * paragraph [0011] - paragraph [0022] * * paragraph [0036] - paragraph [0075] * ----- | 1-3,6-15 | |
| A | TSAKALAKI ELPINIKI ET AL: "Concurrent Communication and Sensing in Cognitive Radio Devices: Challenges and an Enabling Solution", IEEE TRANSACTIONS ON ANTENNAS AND PROPAGATION, IEEE, USA, vol. 62, no. 3, 1 March 2014 (2014-03-01), pages 1125-1137, XP011541787, ISSN: 0018-926X, DOI: 10.1109/TAP.2013.2280051 [retrieved on 2014-02-27] * abstract * * Section I, II and IV * ----- | 1-15 | TECHNICAL FIELDS SEARCHED (IPC)  H04B |

The present search report has been drawn up for all claims

| Place of search | Date of completion of the search | Examiner |
|---|---|---|
| Munich | 4 March 2024 | Galli, Paolo |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
........................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 23 20 0382

This annex lists the patent family members relating to the patent documents cited in the above-mentioned European search report.
The members are as contained in the European Patent Office EDP file on
The European Patent Office is in no way liable for these particulars which are merely given for the purpose of information.

04-03-2024

| Patent document cited in search report | | Publication date | Patent family member(s) | | Publication date |
|---|---|---|---|---|---|
| EP 0690588 | A2 | 03-01-1996 | EP | 0690588 A2 | 03-01-1996 |
| | | | FI | 953230 A | 02-01-1996 |
| | | | GB | 2291567 A | 24-01-1996 |
| | | | JP | H0856384 A | 27-02-1996 |
| US 2012140793 | A1 | 07-06-2012 | CN | 102484500 A | 30-05-2012 |
| | | | EP | 2458909 A1 | 30-05-2012 |
| | | | JP | 5370889 B2 | 18-12-2013 |
| | | | JP | 2011029926 A | 10-02-2011 |
| | | | KR | 20120039649 A | 25-04-2012 |
| | | | US | 2012140793 A1 | 07-06-2012 |
| | | | WO | 2011010458 A1 | 27-01-2011 |

EPO FORM P0459

For more details about this annex : see Official Journal of the European Patent Office, No. 12/82